# EUROPEAN PATENT APPLICATION

(11) **EP 4 529 321 A1**
(43) Date of publication of application: **26.03.2025**
(21) Application number: 23826319.8
(22) Date of filing: 19.06.2023
(51) Int. Cl.: H04W 72/04, H04W 76/27, H04W 74/08

(54) **METHOD FOR COMMUNICATION NODE USED FOR WIRELESS COMMUNICATIONS, AND APPARATUS**

(30) Priority: 20.06.2022 CN 202210698146
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Zhang, Fan
(86) International application number: PCT/CN2023/100925
(87) International publication number: WO 2023/246671

(57) **Abstract**

Disclosed in the present application are a method for a communication node used for wireless communications, and an apparatus. The method comprises a communication node receiving a first message, the first message comprising at least a first information block, the first information block comprising at least a first identifier, the first identifier being associated with a first node, and the first information block being instructed to perform data transmission in an RRC inactive state; and as a response to the reception of the first message, if any condition in a first condition set is not satisfied, determining to execute the data transmission in the RRC inactive state, and if each condition in the first condition set is satisfied, determining not to execute the data transmission in the RRC inactive state, the first condition set comprising: the first message comprising a second information block, the second information block comprising at least a second identifier, the second identifier being associated with the first node, and the second information block being not instructed to perform data transmission in the RRC inactive state.

## Description

### TECHNICAL FIELD

The present application relates to transmission methods and devices in wireless communication systems, and in particular to a transmission method and device in RRC_INACTIVE state.

### BACKGROUND

New Radio (NR) supports Radio Resource Control (RRC)_INACTIVE state, and until 3rd Generation Partnership Project (3GPP) Rel-16 version, does not support transmitting or receiving data in RRC_INACTIVE state. Rel-17 has carried out a Work Item (WI) of "Small Data Transmission (SDT) in NR_INACTIVE state", and developed corresponding technical specifications for MO (UL (Uplink))-SDT, allowing to transmit small packet transmission for UL-oriented packets in RRC_INACTIVE state. In order to reduce power consumption, reduce signaling overhead, and shorten latency, Rel-18 established a WI of "Mobile Terminated-Small Data Transmission (MT (DL (Downlink))-SDT)", studied the triggering mechanism of MT-SDT, and supported RA (Random Access)-SDT and CG (Configured Grant)-SDT as uplink responses, also, studied the MT-SDT procedure for initial DL data reception and subsequent UL/DL data transmissions in RRC_INACTIVE state. Rel-17 conducted a work item (WI) on "receiving MBS (Multicast/ Broadcast Service) in RRC_CONNECTED State", and in order to reduce power consumption, signaling overhead, and latency, Rel-18 established a WI of "Enhancements of NR Multicast and Broadcast Services" to study MBS reception in RRC_INACTIVE state.

### SUMMARY

In the existing protocol, after receiving a paging message in the RRC_INACTIVE state, the UE initiates the RRC resume procedure and enters RRC_CONNECTED State to perform a data transmission. How to trigger MT-SDT via downlink messages and how to determine a radio bearer used for MT-SDT needs to be enhanced; similarly, how to trigger MBS reception in RRC_INACTIVE state through downlink messages and how to determine a radio bearer used for MBS reception in RRC_INACTIVE state need to be enhanced; further, when MT-SDT and MBS reception in RRC_INACTIVE state coexist, the triggering mechanism needs to be enhanced.

To address the above problems, the present application provides a solution for data transmission in the RRC_INACTIVE state. It should be noted that though the present application only took NR system for example in the statement above; the present application is also applicable to scenarios such as LTE (Long-Term Evolution) system. Though originally targeted at Uu air interface, the present application is also applicable to PCS interface. Besides, the present application is not only targeted at scenarios of terminals and base stations, but also at to Vehicle-to-Everything (V2X) scenarios, terminals and relays as well as communication scenarios between relays and base stations where similar technical effect can be achieved. Furthermore, although the original intention of the present application is for terminal and base station scenarios, the present application is also applicable to communication scenarios of Integrated Access and Backhaul (IAB), where similar technical effects can be achieved. Furthermore, although the original intention of the present application is for terrestrial network scenario, it is also applicable to non-terrestrial network (NTN) communication scenarios, where similar technical effects can be achieved. Additionally, the adoption of a unified solution for various scenarios contributes to the reduction of hardware complexity and costs.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

It should be noted that if no conflict is incurred, embodiments in any node in the present application and the characteristics of the embodiments are also applicable to any other node, and vice versa. And the embodiments in the present application and the characteristics in the embodiments can be arbitrarily combined if there is no conflict.

The present application provides a method in a first node for wireless communications, comprising:
receiving a first message, the first message comprising at least a first information block, the first information block comprising at least a first identifier, the first identifier being associated with the first node, the first information block being indicated to perform a data transmission in RRC_INACTIVE state; as a response to the first message being received, determining whether to perform a data transmission in the RRC_INACTIVE state according to whether a first condition set is satisfied;
herein, the first condition set includes: the first message comprising a second information block, the second information block comprising at least a second identifier, the second identifier being associated with the first node, and the second information block not being indicated to perform a data transmission in the RRC_INACTIVE state; the behavior of determining whether to perform a data transmission in the RRC_INACTIVE state according to whether a first condition set is satisfied includes: if any condition in the first condition set is not satisfied, it is determined to perform a data transmission in the RRC_INACTIVE state; if each condition in the first condition set is satisfied, it is determined that a data transmission in the RRC_INACTIVE state is not performed.

In one embodiment, a problem to be solved in the present application comprises: how to trigger transmission for unicast and multicast through a first message.

In one embodiment, a problem to be solved in the present application comprises: how to trigger a data transmission in the RRC_INACTIVE state through a first message.

In one embodiment, a problem to be solved in the present application comprises: how to determine whether to perform a data transmission in the RRC_INACTIVE state.

In one embodiment, a problem to be solved in the present application comprises: how to shorten transmission delay.

In one embodiment, a problem to be solved in the present application comprises: how to reduce state transitions.

In one embodiment, a problem to be solved in the present application comprises: how to reduce signaling overhead.

In one embodiment, characteristics of the above method comprise: when a first message comprises multiple identifiers associated with a first node, and an information block associated with at least one of multiple identifiers indicates the first node to perform a data transmission in the RRC_INACTIVE state, determining whether to perform a data transmission in the RRC_INACTIVE state according to a number of information blocks that indicate the first node to perform a data transmission in the RRC_INACTIVE state.

In one embodiment, advantages of the above method comprise: if at least the first information block and the second information block indicate the first node to perform a data transmission in the RRC_INACTIVE state, the transmission delay is shortened, as well as the state transition and the signaling overhead are reduced by performing the data transmission in the RRC_INACTIVE state.

In one embodiment, advantages of the above method comprise: taking into account the data transmission that cannot be executed in the RRC_INACTIVE state, and shortening the transmission delay of the data that cannot be executed in the RRC_INACTIVE state.

According to one aspect of the present application, it is characterized in that the first identifier is used to indicate the first node, and the second identifier indicates an MBS session in which the first node joins.

According to one aspect of the present application, it is characterized in that the first identifier indicates an MBS session in which the first node joins, and the second identifier is used to indicate the first node.

According to one aspect of the present application, it is characterized in that the first identifier indicates an MBS session in which the first node joins, and the second identifier indicates another MBS session in which the first node joins.

According to one aspect of the present application, it is characterized in that the first information block being configured with a first indication is used to determine that the first information block is indicated to perform a data transmission in the RRC_INACTIVE state.

According to one aspect of the present application, it is characterized in that the second information block not being configured with a second indication is used to determine that the second information block is not indicated to perform a data transmission in the RRC_INACTIVE state.

In one embodiment, the first indication and the second indication are different.

In one embodiment, the first indication and the second indication are the same.

According to one aspect of the present application, comprising:
if it is determined to perform a data transmission in the RRC_INACTIVE state, transmitting a second message; accompanying the second message, resuming each radio bearer in a first radio bearer set, or accompanying a first data block, resuming each radio bearer in a first radio bearer set;
herein, the second message is used to request resuming an RRC connection; the first radio bearer set comprises at least one of at least one DRB ((user) Data Radio Bearer) or SRB2 (Signaling Radio Bearer 2) of the first node, or at least one multicast MRB (MBS Radio Bearer) of the first node; within a time interval from the first message being received to each radio bearer in the first radio bearer set being resumed, the first node does not receive any RRC message indicating that the first node resumes an RRC connection.

In one embodiment, as a response to the second message being transmitted, the first data block is received; the first data block comprises at least user data.

According to one aspect of the present application, comprising:
if it is determined that a data transmission in the RRC_INACTIVE state is not performed, transmitting a fourth message; as a response to the fourth message being transmitted, receiving a third message; as a response to the third message being received, resuming each radio bearer in a second radio bearer set;
herein, the fourth message is used to request resuming an RRC connection; the second radio bearer set comprises at least one of all DRBs of the first node or all multicast MRBs of the first node; within a time interval from the first message being received to the third message being received, any radio bearer in the second radio bearer set is not resumed; the third message indicates that the first node resumes an RRC connection.

The present application provides a method in a second node for wireless communications, comprising:
transmitting a first message, the first message comprising at least a first information block, the first information block comprising at least a first identifier, the first identifier being associated with a first node, the first information block being indicated to perform a data transmission in RRC_INACTIVE state;
herein, the first node is a receiver of the first message; whether a first condition set is satisfied is used to determine whether a data transmission in the RRC_INACTIVE state is performed; the first condition set includes: the first message comprising a second information block, the second information block comprising at least a second identifier, the second identifier being associated with the first node, and the second information block not being indicated to perform a data transmission in the RRC_INACTIVE state; the phrase that whether a first condition set is satisfied is used to determine whether a data transmission in the RRC_INACTIVE state is performed includes: the first condition set being satisfied is used to determine that a data transmission in the RRC_INACTIVE state is performed; the first condition set not being satisfied is used to determine that a data transmission in the RRC_INACTIVE state is not performed.

According to one aspect of the present application, it is characterized in that the first identifier is used to indicate a receiver of the first message, and the second identifier indicates an MBS session in which a receiver of the first message joins.

According to one aspect of the present application, it is characterized in that the first identifier indicates an MBS session in which the first node joins, and the second identifier is used to indicate the first node.

According to one aspect of the present application, it is characterized in that the first identifier indicates an MBS session in which the first node joins, and the second identifier indicates another MBS session in which the first node joins.

According to one aspect of the present application, it is characterized in that the first information block being configured with a first indication is used to determine that the first information block is indicated to perform a data transmission in the RRC_INACTIVE state; the second information block not being configured with a second indication is used to determine that the second information block is not indicated to perform a data transmission in the RRC_INACTIVE state.

According to one aspect of the present application, comprising:
receiving a second message;
herein, the first node determines that a data transmission in the RRC_INACTIVE state is used to determine transmitting the second message; accompanying the second message, each radio bearer in a first radio bearer set is resumed, or accompanying a first data block, each radio bearer in a first radio bearer set is resumed; the first radio bearer set comprises at least one of at least one DRB of the first node, or an SRB2 of the first node, or at least one multicast MRB of the first node; the second message is used to request resuming an RRC connection; within a time interval from the first message being received to each radio bearer in the first radio bearer set being resumed, the first node does not receive any RRC message indicating that the first node resumes an RRC connection.

In one embodiment, as a response to the second message is received, a first data block is transmitted; the first data block comprises at least user data.

According to one aspect of the present application, comprising:
receiving a fourth message; and
as a response to the fourth message being received, transmitting a third message;
herein, the first node determines that a data transmission in the RRC_INACTIVE state not being executed is used to determine transmitting the fourth message; as a response to the third message being received, each radio bearer in a second radio bearer set is resumed by the first node; the fourth message is used to request resuming an RRC connection; the second radio bearer set comprises at least one of all DRBs of the first node or all multicast MRBs of the first node; within a time interval from the first message being received to the third message being received, any radio bearer in the second radio bearer set is not resumed; the third message indicates that the first node resumes an RRC connection.

The present application provides a first node for wireless communications, comprising:
a first processor, receiving a first message, the first message comprising at least a first information block, the first information block comprising at least a first identifier, the first identifier being associated with the first node, the first information block being indicated to perform a data transmission in RRC_INACTIVE state; as a response to the first message being received, determining whether to perform a data transmission in the RRC_INACTIVE state according to whether a first condition set is satisfied;
herein, the first condition set includes: the first message comprising a second information block, the second information block comprising at least a second identifier, the second identifier being associated with the first node, and the second information block not being indicated to perform a data transmission in the RRC_INACTIVE state; the behavior of determining whether to perform a data transmission in the RRC_INACTIVE state according to whether a first condition set is satisfied includes: if any condition in the first condition set is not satisfied, it is determined to perform a data transmission in the RRC_INACTIVE state; if each condition in the first condition set is satisfied, it is determined that a data transmission in the RRC_INACTIVE state is not performed.

The present application provides a second node for wireless communications, comprising:
a second transmitter, transmitting a first message, the first message comprising at least a first information block, the first information block comprising at least a first identifier, the first identifier being associated with a first node, the first information block being indicated to perform a data transmission in RRC_INACTIVE state;
herein, the first node is a receiver of the first message; whether a first condition set is satisfied is used to determine whether a data transmission in the RRC_INACTIVE state is performed; the first condition set includes: the first message comprising a second information block, the second information block comprising at least a second identifier, the second identifier being associated with the first node, and the second information block not being indicated to perform a data transmission in the RRC_INACTIVE state; the phrase that whether a first condition set is satisfied is used to determine whether a data transmission in the RRC_INACTIVE state is performed includes: any condition in the first condition set not being satisfied is used to determine that a data transmission in the RRC_INACTIVE state is performed; each condition in the first condition set is satisfied is used to determine that a data transmission in the RRC_INACTIVE state is not performed.

In one embodiment, the present application has the following advantages over conventional schemes:
- . shortening transmission delay;
- . reducing state transitions;
- . reducing signaling overhead.

The present application provides a method in a first node for wireless communications, comprising:
receiving a first message, the first message comprising at least a first information block, the first information block comprising at least a first identifier, the first identifier being associated with the first node, the first information block being indicated to perform a data transmission in RRC_INACTIVE state; as a response to the first message being received, determining to perform a data transmission in the RRC_INACTIVE state; as a response to determining to perform a data transmission in the RRC_INACTIVE state, transmitting a second message; accompanying the second message, resuming each radio bearer in a first radio bearer set, or accompanying the first data block, resuming each radio bearer in a first radio bearer set;
herein, the second message is used to request resuming an RRC connection; the first radio bearer set comprises at least one of at least one DRB of the first node, or an SRB2 of the first node, or at least one multicast MRB of the first node; within a time interval from the first message being received to each radio bearer in the first radio bearer set being resumed, the first node does not receive any RRC message indicating that the first node resumes an RRC connection.

According to one aspect of the present application, it is characterized in that as a response to the second message being transmitted, a first data block is received; the first data block comprises at least user data.

According to one aspect of the present application, it is characterized in that the first identifier is used to indicate the first node, and the first message does not comprise an identifier indicating an MBS session in which the first node joins.

According to one aspect of the present application, it is characterized in that the first identifier indicates an MBS session in which the first node joins, and the first message does not comprise an identifier indicating the first node.

According to one aspect of the present application, it is characterized in that the first information block being configured with a first indication is used to determine that the first information block is indicated to perform a data transmission in the RRC_INACTIVE state.

The present application provides a method in a second node for wireless communications, comprising:
transmitting a first message, the first message comprising at least a first information block, the first information block comprising at least a first identifier, the first identifier being associated with the first node, the first information block being indicated to perform a data transmission in RRC_INACTIVE state; receiving a second message;
herein, as a response to a data transmission in the RRC_INACTIVE state being executed by a receiver of the first message, the second message is transmitted by a receiver of the first message; the second message is used to request resuming an RRC connection; accompanying the second message, each radio bearer in a first radio bearer set is resumed by a receiver of the first message, or accompanying a first data block, each radio bearer in a first radio bearer set is resumed by a receiver of the first message; the first radio bearer set comprises at least one of at least one DRB of the first node, or an SRB2 of the first node, or at least one multicast MRB of the first node; within a time interval from the first message being received to each radio bearer in the first radio bearer set being resumed, the first node does not receive any RRC message indicating that the first node resumes an RRC connection.

According to one aspect of the present application, it is characterized in that as a response to the second message is received, a first data block is transmitted; the first data block comprises at least user data.

According to one aspect of the present application, it is characterized in that the first identifier is used to indicate the first node, and the first message does not comprise an identifier indicating an MBS session in which the first node joins.

According to one aspect of the present application, it is characterized in that the first identifier indicates an MBS session in which the first node joins, and the first message does not comprise an identifier indicating the first node.

According to one aspect of the present application, it is characterized in that whether the first information block comprises a first indication is used to determine whether the first information block indicates that the first node performs a data transmission in the RRC_INACTIVE state.

The present application provides a first node for wireless communications, comprising:
a first processor, receiving a first message, the first message comprising at least a first information block, the first information block comprising at least a first identifier, the first identifier being associated with the first node, the first information block being indicated to perform a data transmission in RRC_INACTIVE state; as a response to the first message being received, determining to perform a data transmission in the RRC_INACTIVE state; as a response to determining to perform a data transmission in the RRC_INACTIVE state, transmitting a second message; accompanying the second message, resuming each radio bearer in a first radio bearer set, or accompanying the first data block, resuming each radio bearer in a first radio bearer set;
herein, the second message is used to request resuming an RRC connection; the first radio bearer set comprises at least one of at least one DRB of the first node, or an SRB2 of the first node, or at least one multicast MRB of the first node; within a time interval from the first message being received to each radio bearer in the first radio bearer set being resumed, the first node does not receive any RRC message indicating that the first node resumes an RRC connection.

According to one aspect of the present application, it is characterized in that as a response to the second message being transmitted, a first data block is received; the first data block comprises at least user data.

The present application provides a second node for wireless communications, comprising:
transmitting a first message, the first message comprising at least a first information block, the first information block comprising at least a first identifier, the first identifier being associated with the first node, the first information block being indicated to perform a data transmission in RRC_INACTIVE state; receiving a second message;
herein, as a response to a data transmission in the RRC_INACTIVE state being executed by a receiver of the first message, the second message is transmitted by a receiver of the first message; the second message is used to request resuming an RRC connection; accompanying the second message, each radio bearer in a first radio bearer set is resumed by a receiver of the first message, or accompanying a first data block, each radio bearer in a first radio bearer set is resumed by a receiver of the first message; the first radio bearer set comprises at least one of at least one DRB of the first node, or an SRB2 of the first node, or at least one multicast MRB of the first node; within a time interval from the first message being received to each radio bearer in the first radio bearer set being resumed, the first node does not receive any RRC message indicating that the first node resumes an RRC connection.

In one embodiment, the present application has the following advantages over conventional schemes:
- . triggering MT-SDT through a first identifier in a paging message;
- . triggering a reception of a multicast MBS in RRC_INACTIVE state through a first identifier in a paging message;
- . determining an appropriate and resumed radio bearer set during a data transmission in the RRC_INACTIVE state.

### BRIEF DESCRIPTION OF THE DRAWINGS

Other features, objects and advantages of the present application will become more apparent from the detailed description of non-restrictive embodiments taken in conjunction with the following drawings:
FIG. 1A illustrates a flowchart of transmission of a first message according to one embodiment of the present application;
FIG. 1B illustrates a flowchart of transmission of a first message according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of a first communication device and a second communication device according to one embodiment of the present application;
FIG. 5 illustrates a flowchart of radio signal transmission according to one embodiment of the present application;
FIG. 6 illustrates a flowchart of radio signal transmission according to another embodiment of the present application;
FIG. 7 illustrates a flowchart of radio signal transmission according to another embodiment of the present application;
FIG. 8 illustrates a flowchart of radio signal transmission according to another embodiment of the present application;
FIG. 9 illustrates a structure block diagram of a processor in a first node according to one embodiment of the present application;
FIG. 10 illustrates a structure block diagram of a processor in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1A

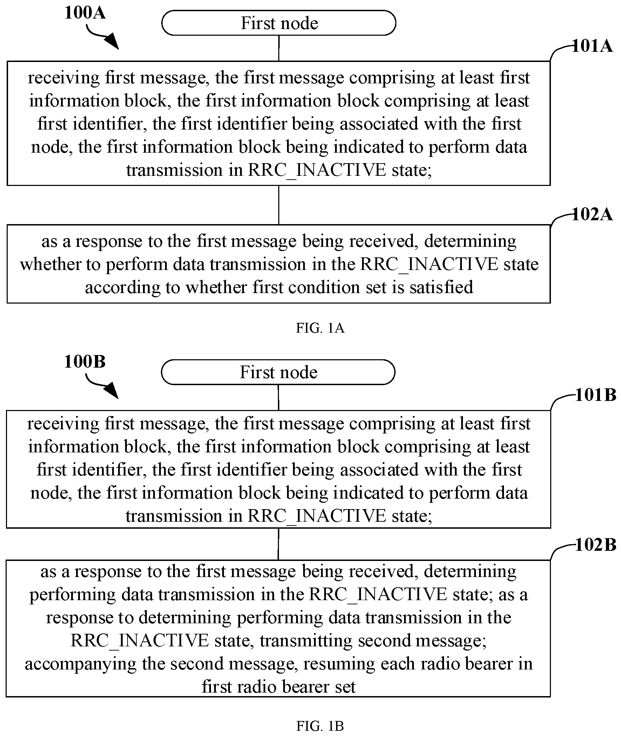

Embodiment 1A illustrates a flowchart of a transmission of a first message according to one embodiment of the present application, as shown in FIG. 1A. In FIG. 1A, each box represents a step. It should be noted particularly that the order in which the boxes are arranged does not imply a chronological sequence of each step respectively marked.

In embodiment 1A, a first node in the present application in step 101A, receives a first message, the first message comprises at least a first information block, the first information block comprises at least a first identifier, the first identifier is associated with the first node, the first information block is indicated to perform a data transmission in RRC_INACTIVE state; in step 102A, as a response to the first message being received, determines whether to perform a data transmission in the RRC_INACTIVE state according to whether a first condition set is satisfied; herein, the first condition set includes: the first message comprising a second information block, the second information block comprising at least a second identifier, the second identifier being associated with the first node, and the second information block not being indicated to perform a data transmission in the RRC_INACTIVE state; the behavior of determining whether to perform a data transmission in the RRC_INACTIVE state according to whether a first condition set is satisfied includes: if any condition in the first condition set is not satisfied, it is determined to perform a data transmission in the RRC_INACTIVE state; if each condition in the first condition set is satisfied, it is determined that a data transmission in the RRC_INACTIVE state is not performed.

In one embodiment, the first message is received in RRC_INACTIVE state.

In one embodiment, the first message is used for an RAN (Radio Access Network) paging.

In one embodiment, the first message is triggered by NG (Next Generation) - RAN.

In one embodiment, the first message is used for paging.

In one embodiment, the first message comprises an RRC message.

In one embodiment, the first message is a radio message.

In one embodiment, the first message is a downlink message.

In one embodiment, the first message is transmitted through a Paging Control Channel (PCCH).

In one embodiment, the first message is an RRC message.

In one embodiment, the first message is a Paging message.

In one embodiment, the first information block comprises at least one RRC Information Element (IE).

In one embodiment, the first information block comprises at least one RRC field.

In one embodiment, the first information block is an RRC IE.

In one embodiment, the first information block is an RRC field.

In one embodiment, a name of the first information block includes Paging.

In one embodiment, the first information block is a PagingRecord or PagingRecord-r18; the first identifier is a first-type identifier.

In one embodiment, a name of the first information block includes PagingRecord; the first identifier is a first-type identifier.

In one embodiment, the first information block is a field in a PagingRecordList; the first identifier is a first-type identifier.

In one embodiment, the first information block is a PagingGroup or PagingGroup-r18; the first identifier is a second-type identifier.

In one embodiment, a name of the first information block includes PagingGroup; the first identifier is a second-type identifier.

In one embodiment, the first information block is a field in PagingGroupList or PagingGroupList-r17 or PagingGroupList-r18; the first identifier is a second-type identifier.

In one embodiment, the first information block is a TMGI or TMGI-R17 or TMGI-R18; the first identifier is a second-type identifier.

In one embodiment, a name of the first information block includes at least one of Paging, Group, or Record; the first identifier is a second-type identifier.

In one embodiment, the second information block comprises at least one RRC IE.

In one embodiment, the second information block comprises at least one RRC field.

In one embodiment, the second information block is an RRC IE.

In one embodiment, the second information block is an RRC field.

In one embodiment, a name of the second information block includes Paging.

In one embodiment, the second information block is a PagingRecord or PagingRecord-r18; the second identifier is a first-type identifier.

In one embodiment, a name of the second information block includes PagingRecord; the second identifier is a first-type identifier.

In one embodiment, the second information block is a field in a PagingRecordList; the second identifier is a first-type identifier.

In one embodiment, the second information block is a PagingGroup or PagingGroup-r18; the second identifier is a second-type identifier.

In one embodiment, a name of the second information block includes PagingGroup; the second identifier is a second-type identifier.

In one embodiment, the first information block is a field in PagingGroupList or PagingGroupList-r17 or PagingGroupList-r18; the second identifier is a second-type identifier.

In one embodiment, the second information block is a TMGI or TMGI-R17 or TMGI-R18; the second identifier is a second-type identifier.

In one embodiment, a name of the second information block includes at least one of Paging, Group, or Record; the second identifier is a second-type identifier.

In one embodiment, the first condition set is: the first message comprises a second information block; herein, the second information block comprises at least a second identifier, the second identifier is associated with the first node, and the second information block is not indicated to perform a data transmission in the RRC_INACTIVE state.

In one embodiment, conditions in the first condition set at least comprise: the first message comprises a second information block; herein, the second information block comprises at least a second identifier, the second identifier is associated with the first node, and the second information block is not indicated to perform a data transmission in the RRC_INACTIVE state.

In one embodiment, if the first message comprises a second information block, the first condition set is satisfied; if the first message does not comprise a second information block, the first condition set is not satisfied.

In one embodiment, at least the first message comprising a second information block is used to determine that the first condition set is satisfied.

In one embodiment, the second information block is any entry in the first message that comprises a first-type identifier other than the first identifier associated with the first node and is indicated to perform a data transmission in the RRC_INACTIVE state.

In one embodiment, the second information block is any entry in the first message that comprises a second-type identifier other than the first identifier associated with the first node and is indicated to perform a data transmission in the RRC_INACTIVE state.

In one embodiment, the second information block is any entry in the first message that comprises a first-type identifier other than the first identifier associated with the first node and is indicated to perform a data transmission in the RRC_INACTIVE state, or the second information block is any entry in the first message that comprises a second-type identifier other than the first identifier associated with the first node and is indicated to perform a data transmission in the RRC_INACTIVE state.

In one embodiment, if there is no entry in the first message that comprises a first-type identifier other than the first identifier associated with the first node and is not indicated to perform a data transmission in the RRC_INACTIVE state, and there is no entry in the first message that comprises a second-type identifier other than the first identifier associated with the first node and is not indicated to perform a data transmission in the RRC_INACTIVE state, the first message does not comprise the second information block.

In one embodiment, if there is no entry in the first message that comprises a first-type identifier other than the first identifier associated with the first node and is not indicated to perform a data transmission in the RRC_INACTIVE state, the first message does not comprise the second information block.

In one embodiment, if there is no entry in the first message that comprises a second-type identifier other than the first identifier associated with the first node and is not indicated to perform a data transmission in the RRC_INACTIVE state, the first message does not comprise the second information block.

In one embodiment, the first identifier is a first-type identifier; the second identifier is a second-type identifier.

In one subembodiment of the embodiment, if the second list exists, and there is at least one entry in the second list, a second-type identifier in each of the at least one entry in the second list is associated with the first node, at least one entry in the at least one entry in the second list is not indicated to perform a data transmission in RRC_INACTIVE state, the first message comprises the second information block; the second information block is one of the at least one entry in the second list that is not indicated to perform a data transmission in RRC_INACTIVE state.

In one subembodiment of the embodiment, if the second list does not exist, the first message does not comprise the second information block.

In one subembodiment of the embodiment, if the second list exists, a second-type identifier in any entry in the second list is not associated with the first node, the first message does not comprise the second information block.

In one subembodiment of the embodiment, if the second list exists, there is at least one entry in the second list, a second-type identifier in each of the at least one entry in the second list is associated with the first node, each of the at least one entry in the second list is indicated to perform a data transmission in RRC_INACTIVE state, the first message does not comprise the second information block.

In one embodiment, the first identifier is a first-type identifier; the second identifier is any of a first-type identifier or a second-type identifier.

In one subembodiment of the embodiment, if the second list exists and there exists at least one entry in the second list, a second-type identifier in each of the at least one entry in the second list is associated with the first node, at least one entry in the at least one entry in the second list is not indicated to perform a data transmission in RRC_INACTIVE state, the first message comprises the second information block; the second information block is one of the at least one entry in the second list that is not indicated to perform a data transmission in RRC_INACTIVE state.

In one subembodiment of the embodiment, if the first list exists at least one entry other than the first information block, a first-type identifier in each of the at least one entry in the first list is associated with the first node, at least one entry in the at least one entry in the first list is not indicated to perform a data transmission in RRC_INACTIVE state, the first message comprises the second information block; the second information block is one of the at least one entry in the first list that is not indicated to perform a data transmission in RRC_INACTIVE state.

In one subembodiment of the embodiment, if a first-type identifier in any entry other than the first information block in the first list is not associated with the first node, and the second list does not exist, the first message does not comprise the second information block.

In one subembodiment of the embodiment, if a first-type identifier in any entry other than the first information block in the first list is not associated with the first node, and the second list exists, a second-type identifier in any entry of the second list not being associated with the first node, the first message does not comprise the second information block.

In one subembodiment of the embodiment, if a first-type identifier in any entry other than the first information block in the first list is not associated with the first node, and the second list exists, there is at least one entry in the second list, a second-type identifier in each of the at least one entry in the second list is associated with the first node, each of the at least one entry in the second list is indicated to perform a data transmission in RRC_INACTIVE state, the first message does not comprise the second information block.

In one subembodiment of the embodiment, if the first list exists at least one entry other than the first information block, a first-type identifier in each of the at least one entry in the first list is associated with the first node, each of the at least one entry is indicated to perform a data transmission in RRC_INACTIVE state, and the second list does not exist, the first message does not comprise the second information block.

In one subembodiment of the embodiment, if there exists at least one entry other than the first information block in the first list, a first-type identifier in each of the at least one entry in the first list is associated with the first node, each of the at least one entry in the first list is indicated to perform a data transmission in RRC_INACTIVE state, and the second list exists, a second-type identifier in any entry in the second list not being associated with the first node, the first message does not comprise the second information block.

In one subembodiment of the embodiment, if there exists at least one entry other than the first information block in the first list, a first-type identifier in each of the at least one entry in the first list is associated with the first node, each of the at least one entry in the first list is indicated to perform a data transmission in RRC_INACTIVE state, and the second list exists, there exists at least one entry in the second list, a second-type identifier in each of the at least one entry in the second list is associated with the first node, each of the at least one entry in the second list is indicated to perform a data transmission in RRC_INACTIVE state, the first message does not comprise the second information block.

In one embodiment, the first identifier is a second-type identifier; the second identifier is a first-type identifier.

In one subembodiment of the embodiment, if the second list exists, there exists at least one entry in the second list, a first-type identifier in each of the at least one entry in the second list is associated with the first node, at least one entry in the at least one entry in the second list is not indicated to perform a data transmission in RRC_INACTIVE state, the first message comprises the second information block; the second information block is one of the at least one entry in the second list that is not indicated to perform a data transmission in RRC_INACTIVE state.

In one subembodiment of the embodiment, if the second list does not exist, the first message does not comprise the second information block.

In one subembodiment of the embodiment, if the second list exists and a first-type identifier in any entry in the second list is not associated with the first node, the first message does not comprise the second information block.

In one subembodiment of the embodiment, if the second list exists, there is at least one entry in the second list, a first-type identifier in each of the at least one entry in the second list is associated with the first node, each of the at least one entry in the second list is indicated to perform a data transmission in RRC_INACTIVE state, the first message comprises the second information block.

In one embodiment, the first identifier is a second-type identifier; the second identifier is any of a first-type identifier or a second-type identifier.

In one subembodiment of the embodiment, if the second list exists, there exists at least one entry in the second list, a first-type identifier in each of the at least one entry in the second list is associated with the first node, at least one entry in the at least one entry in the second list is not indicated to perform a data transmission in RRC_INACTIVE state, the first message comprises the second information block; the second information block is one of the at least one entry in the second list that is not indicated to perform a data transmission in RRC_INACTIVE state.

In one subembodiment of the embodiment, if the first list exists at least one entry other than the first information block, a second-type identifier in each of the at least one entry is associated with the first node, at least one entry in the at least one entry in the first list is not indicated to perform a data transmission in RRC_INACTIVE state, the first message comprises the second information block; the second information block is one of the at least one entry in the first list that is not indicated to perform a data transmission in RRC_INACTIVE state.

In one subembodiment of the embodiment, if a second-type identifier in any entry other than the first information block in the first list is not associated with the first node, the second list does not exist, the first message does not comprise the second information block.

In one subembodiment of the embodiment, if a second-type identifier in any entry other than the first information block in the first list is not associated with the first node, the second list exists, a first-type identifier in any entry in the second list is not associated with the first node, the first message does not comprise the second information block.

In one subembodiment of the embodiment, if a second-type identifier in any entry other than the first information block in the first list is not associated with the first node, the second list exists, there is at least one entry in the second list, a first-type identifier in each of the at least one entry in the second list is associated with the first node, each of the at least one entry in the second list is indicated to perform a data transmission in RRC_INACTIVE state, the first message does not comprise the second information block.

In one subembodiment of the embodiment, if the first list exists at least one entry other than the first information block, a second-type identifier in each of the at least one entry in the first list is associated with the first node, each of the at least one entry is indicated to perform a data transmission in RRC_INACTIVE state, the second list does not exist, the first message does not comprise the second information block.

In one subembodiment of the embodiment, if there exists at least one entry other than the first information block in the first list, a second-type identifier in each of the at least one entry in the first list is associated with the first node, each of the at least one entry in the first list is indicated to perform a data transmission in RRC_INACTIVE state, and the second list exists, a first-type identifier in any entry in the second list is not associated with the first node, the first message does not comprise the second information block.

In one subembodiment of the embodiment, if there exist at least one entry other than the first information block in the first list, a second-type identifier in each of the at least one entry in the first list is associated with the first node, each of the at least one entry in the first list is indicated to perform a data transmission in RRC_INACTIVE state, and the second list exists, there exists at least one entry in the second list, a first-type identifier in each of the at least one entry in the second list is associated with the first node, each of the at least one entry in the second list is indicated to perform a data transmission in RRC_INACTIVE state, the first message does not comprise the second information block.

In one embodiment, the first identifier is a second-type identifier; the second identifier is a second-type identifier.

In one subembodiment of the embodiment, if the first list exists at least one entry other than the first information block, a second-type identifier in each of the at least one entry is associated with the first node, at least one entry in the at least one entry in the first list is not indicated to perform a data transmission in RRC_INACTIVE state, the first message comprises the second information block; the second information block is one of the at least one entry in the first list that is not indicated to perform a data transmission in RRC_INACTIVE state.

In one subembodiment of the embodiment, if a second-type identifier in any entry other than the first information block in the first list is not associated with the first node, the first message does not comprise the second information block. In one subembodiment of the embodiment, if the first list exists at least one entry other than the first information block, a second-type identifier in each of the at least one entry is associated with the first node, each of the at least one entry in the first list is indicated to perform a data transmission in RRC_INACTIVE state, the first message does not comprise the second information block.

In one embodiment, each entry in the second list comprises a first-type identifier.

In one embodiment, each entry in the second list comprises a second-type identifier.

In one embodiment, if an entry in the second list comprises a first-type identifier, and the first-type identifier matches a fullI-RNTI stored in the first node, the first-type identifier is associated with the first node.

In one embodiment, if an entry in the second list comprises a second-type identifier, and the first node joins in an MBS session indicated by the second-type identifier, the second-type identifier is associated with the first node.

In one embodiment, the first-type identifier is used to page a UE.

In one embodiment, the first-type identifier is used to indicate a UE.

In one embodiment, the first-type identifier is a user identifier.

In one embodiment, the first-type identifier is used to indicate a UE.

In one embodiment, the first-type identifier comprises a positive integer number of bit(s).

In one embodiment, the first-type identity is a non-negative integer.

In one embodiment, the first-type identifier is a bit string.

In one embodiment, the first-type identifier occupies 40 bits.

In one embodiment, the first-type identifier is a ue-Identity.

In one embodiment, the first-type identifier is a PagingUE-Identity.

In one embodiment, the first-type identifier is a fullI-RNTI.

In one embodiment, the first-type identifier is an I-RNTI-Value.

In one embodiment, a first-type identifier is indicated by a ue-Identity field.

In one embodiment, a first-type identifier is indicated by an RRC field whose name includes ue-Identity.

In one embodiment, the second-type identifier is used to page a group of UEs; the group of UEs comprise one or multiple UEs.

In one embodiment, the second-type identifier is used to indicate a group of UEs; the group of UEs comprise one or multiple UEs.

In one embodiment, the second-type identifier is the Temporary Mobile Group Identity (TMGI).

In one embodiment, the second-type identifier comprises an index and a serving identifier of Public Land Mobile Network (PLMN).

In one embodiment, the second-type identifier comprises an identifier of PLMN and a serving identifier.

In one embodiment, a second-type identifier is indicated by a TMGI field.

In one embodiment, a second-type identifier is indicated by a TMGI-r17 field.

In one embodiment, a second-type identifier is indicated by a TMGI-r18 field.

In one embodiment, a second-type identifier is indicated by an RRC field whose name includes TMGI.

In one embodiment, an index of the PLMN is an integer not less than 1 and not greater than maxPLMN.

In one embodiment, an identifier of the PLMN is configured through PLMN-Identity.

In one embodiment, the serving identifier is a OCTET STRING.

In one embodiment, the serving identifier occupies 3 OCTETs.

In one embodiment, the first identifier is configured.

In one embodiment, the first identifier is a first-type identifier.

In one embodiment, the first identifier is a second-type identifier.

In one embodiment, the first identifier being associated with the first node refers to: the first identifier is used to page the first node.

In one embodiment, the first identifier being associated with the first node includes: the first node is configured with the first identifier.

In one embodiment, the first identifier being associated with the first node includes: the first identifier is used to indicate the first node.

In one embodiment, the first identifier being associated with the first node includes: the first identifier indicates an MBS session in which the first node joins.

In one embodiment, the first identifier is used to indicate the first node, and the first identifier is a first-type identifier.

In one embodiment, the first identifier indicates an MBS session in which the first node joins, and the first identifier is a second-type identifier.

In one embodiment, the first identifier being used to indicate the first node refers to: the first identifier matches a fullI-RNTI stored in the first node.

In one embodiment, the second identifier is configured.

In one embodiment, the second identifier is a first-type identifier.

In one embodiment, the second identifier is a second-type identifier.

In one embodiment, the second identifier being associated with the first node refers to: the second identifier is used to page the first node.

In one embodiment, the second identifier being associated with the first node includes: the first node is configured with the second identifier.

In one embodiment, the second identifier being associated with the first node includes: the second identifier is used to indicate the first node.

In one embodiment, the second identifier being associated with the first node includes: the second identifier indicates an MBS session in which the first node joins.

In one embodiment, the second identifier is used to indicate the first node, and the second identifier is a first-type identifier.

In one embodiment, the second identifier indicates an MBS session in which the first node joins, and the second identifier is a second-type identifier.

In one embodiment, the second identifier being used to indicate the first node refers to: the second identifier matches a fullI-RNTI stored in the first node.

In one embodiment, the first identifier is used to indicate the first node, and the second identifier indicates an MBS session in which the first node joins.

In one embodiment, the first identifier indicates an MBS session in which the first node joins, and the second identifier is used to indicate the first node.

In one embodiment, the first identifier indicates an MBS session in which the first node joins, and the second identifier indicates another MBS session in which the first node joins.

In one embodiment, the first identifier is a first-type identifier; the second identifier is a second-type identifier.

In one embodiment, the first identifier is a first-type identifier; the second identifier is any of a first-type identifier or a second-type identifier.

In one embodiment, the first identifier is a second-type identifier; the second identifier is a first-type identifier.

In one embodiment, the first identifier is a second-type identifier; the second identifier is any of a first-type identifier or a second-type identifier.

In one embodiment, the first information block is explicitly indicated to perform a data transmission in the RRC_INACTIVE state.

In one embodiment, the first information block is implicitly indicated to perform a data transmission in the RRC_INACTIVE state.

In one embodiment, a field in the first information block is used to determine that the first information block is indicated to perform a data transmission in the RRC_INACTIVE state.

In one embodiment, CG (Configured Grant)-SDT resources are configured to determine that the first information block is indicated to perform a data transmission in the RRC_INACTIVE state.

In one embodiment, random access resources used to indicate SDT are configured to determine that the first information block is indicated to perform a data transmission in the RRC_INACTIVE state.

In one embodiment, the first message indicating at least one radio bearer in the first radio bearer set is used to determine that the first information block is indicated to perform a data transmission in the RRC_INACTIVE state.

In one embodiment, the target message indicating at least one radio bearer in the first radio bearer set is used to determine that the first information block is indicated to perform a data transmission in the RRC_INACTIVE state.

In one embodiment, the first information block being configured with a first indication is used to determine that the first information block is indicated to perform a data transmission in the RRC_INACTIVE state.

In one embodiment, the second information block is not explicitly indicated to perform a data transmission in the RRC_INACTIVE state.

In one embodiment, the second information block is not implicitly indicated to perform a data transmission in the RRC_INACTIVE state.

In one embodiment, a field in the second information block is used to determine that the second information block is not indicated to perform a data transmission in the RRC_INACTIVE state.

In one embodiment, at least one of CG-SDT resources or random access resources used to indicate an SDT being configured or not being configured is used to determine that the first information block is indicated to perform a data transmission in the RRC_INACTIVE state.

In one embodiment, the first message not indicating at least one radio bearer in the first radio bearer set is used to determine that the first information block is indicated to perform a data transmission in the RRC_INACTIVE state.

In one embodiment, the target message not indicating at least one radio bearer in the first radio bearer set is used to determine that the first information block is indicated to perform a data transmission in the RRC_INACTIVE state.

In one embodiment, the second information block not being configured with the first indication is used to determine that the second information block is not indicated to perform a data transmission in the RRC_INACTIVE state.

In one embodiment, the second information block not being configured with a second indication is used to determine that the second information block is not indicated to perform a data transmission in the RRC_INACTIVE state.

In one embodiment, the first identifier is a first-type identifier, and the second identifier is a first-type identifier; the first-type identifier indicates an MBS session in which the first node joins.

In one embodiment, the first identifier is a first-type identifier, and the second identifier is a first-type identifier; the first-type identifier indicates the first node.

In one embodiment, the first identifier is a first-type identifier, and the second identifier is a second-type identifier; the first-type identifier indicates the first node, and the second-type identifier indicates an MBS session in which the first node joins.

In one embodiment, the first identifier is a first-type identifier, and the second identifier is a second-type identifier; the first-type identifier indicates an MBS session in which the first node joins, and the second-type identifier indicates the first node.

In one embodiment, the first message comprises a first list, the first list comprises Q1 entries, and the first information block is an entry in the first list.

In one subembodiment of the above embodiment, the first list is the first candidate list.

In one subembodiment of the above embodiment, the first list is the second candidate list.

In one subembodiment of the above embodiment, Q1 is not greater than maxNrofPageRec.

In one subembodiment of the above embodiment, Q1 is equal to 1.

In one subembodiment of the above embodiment, Q1 is not less than 1.

In one embodiment, at least one entry in the first list is associated with the first node.

In one embodiment, each entry in the first list comprises a first-type identifier.

In one embodiment, each entry in the first list comprises a second-type identifier.

In one embodiment, if an entry in the first list comprises a first-type identifier, and the first-type identifier matches a fullI-RNTI stored in the first node, the first-type identifier is associated with the first node.

In one embodiment, if an entry in the first list comprises a second-type identifier, and the first node joins in an MBS session indicated by the second-type identifier, the second-type identifier is associated with the first node.

In one embodiment, the first information block comprises the first indication.

In one subembodiment of the above embodiment, whether an entry in the first list comprises the first indication is used to determine whether the entry is indicated to perform a data transmission in RRC_INACTIVE state.

In one subembodiment of the above embodiment, if an entry in the first list comprises the first indication, the entry is indicated to perform a data transmission in RRC_INACTIVE state; if an entry in the first list does not comprise the first indication, the entry is not indicated to perform a data transmission in RRC_INACTIVE state.

In one subembodiment of the above embodiment, the first information block comprising a first indication is used to determine that the first information block is indicated to perform a data transmission in the RRC_INACTIVE state.

In one subembodiment of the above embodiment, the first information block comprises the first identifier and the first information block comprising the first indication are used to determine that the first node is indicated to perform a data transmission in the RRC_INACTIVE state.

In one subembodiment of the above embodiment, the first information block being configured the first indication refers to: the first information block comprises a first indication.

In one embodiment, the first message comprises a first bit map, and each entry in the first list corresponds to a bit in the first bit map; the first target bit is a bit corresponding to the first information block in the first bit map.

In one subembodiment of the embodiment, a size of the first bit map is variable.

In one subembodiment of the embodiment, the first bit map occupies Q1 bits.

In one subembodiment of the embodiment, a size of the first bit map is fixed.

In one subembodiment of the embodiment, the first bit map occupies the maxNrofPageRec bit(s).

In one subembodiment of the embodiment, one bit in the first bit map is used to determine whether it is indicated to perform a data transmission in RRC_INACTIVE state.

In one subembodiment of the embodiment, one bit corresponding to an entry in the first list in the first bit map is used to determine whether the entry is indicated to perform a data transmission in RRC_INACTIVE state.

In one subembodiment of the embodiment, if a bit corresponding to an entry in the first list in the first bit map is set to 1, the entry is indicated to perform a data transmission in RRC_INACTIVE state; if a bit corresponding to an entry in the first list in the first bit map is set to 0, the entry is not indicated to perform a data transmission in RRC_INACTIVE state.

In one subembodiment of the embodiment, a position of an entry in the first list is used to determine a bit corresponding to the entry in the first bit map.

In one subembodiment of the embodiment, a position of an entry in the first list in the first list refers to an order of the entry in the first list.

In one subembodiment of the embodiment, a position of the first information block in the first list is used to determine a first target bit in the first bit map.

In one subembodiment of the embodiment, a position of the first information block in the first list refers to an order of the first sub-information block in the first list.

In one subembodiment of the embodiment, if the first information block is a q1-th entry in the first list, the first target bit is the q1-th bit in the first bit map.

In one subembodiment of the embodiment, the first target bit is set to 1.

In one subembodiment of the embodiment, the first target bit set to 1 is used to determine that the first information block is indicated to perform a data transmission in the RRC_INACTIVE state.

In one subembodiment of the embodiment, the first information block comprising the first identifier and the first target bit set to 1 are used to determine that the first node is indicated to perform a data transmission in the RRC_INACTIVE state.

In one subembodiment of the above embodiment, the first information block being configured with the first indication refers to: the first target bit is set to 1.

In one embodiment, the first message comprises a first additional list, and the first additional list corresponds to the first list; the first additional information block is an entry corresponding to the first information block in the first additional list.

In one subembodiment of the above embodiment, whether an entry in the first additional list comprises the first indication is used to determine whether an entry corresponding to the entry in the first additional list in the first list is indicated to perform a data transmission in RRC_INACTIVE state.

In one subembodiment of the above embodiment, if an entry in the first additional list comprises a first indication, an entry corresponding to the entry in the first additional list in the first list is indicated to perform a data transmission in RRC_INACTIVE state; if an entry in the first additional list does not comprise the first indication, an entry corresponding to the entry in the first additional list in the first list is not indicated to perform a data transmission in RRC_INACTIVE state.

In one subembodiment of the above embodiment, a number of entries in the first additional list is equal to a number of entries in the first list, and an order of entries in the first additional list is the same as an order of entries in the first list.

In one subembodiment of the above embodiment, the first information block is a q1-th entry in the first list, and the first additional information block is the q1-th entry in the first additional list, q1 being a positive integer not greater than Q1.

In one subembodiment of the embodiment, the first additional information block is for the first information block.

In one subembodiment of the above embodiment, the first additional information block comprising the first indication is used to determine that the first information block is indicated to perform a data transmission in the RRC_INACTIVE state.

In one subembodiment of the above embodiment, the first information block comprising the first identifier and the first additional information block comprising the first indication are used to determine that the first node is indicated to perform a data transmission in the RRC_INACTIVE state.

In one subembodiment of the above embodiment, the first information block being configured the first indication refers to: the first additional information block comprises the first indication.

In one embodiment, the first message comprises the second information block.

In one embodiment, the first message does not comprise the second information block.

In one embodiment, the second information block is an entry in the first list.

In one subembodiment of the above embodiment, the second information block does not comprise the first indication; the first information block comprises the first indication.

In one subsidiary embodiment of the subembodiment, the second information block not comprising the first indication is used to determine that the second information block is not indicated to perform a data transmission in the RRC_INACTIVE state.

In one subsidiary embodiment of the subembodiment, the second information block comprising the second identifier and the second information block not comprising the first indication are used to determine that the first node is not indicated to perform a data transmission in the RRC_INACTIVE state.

In one subsidiary embodiment of the subembodiment, the second information block not being configured with the first indication refers to: the second information block does not comprise a first indication.

In one subembodiment of the above embodiment, a second target bit is a bit corresponding to the second information block in the first bit map; the first message comprises a first bit map, and each entry in the first list corresponds to a bit in the first bit map; the first target bit is a bit corresponding to the first information block in the first bit map.

In one subsidiary embodiment of the above subembodiment, the second target bit is set as 0.

In one subsidiary embodiment of the above subembodiment, the first target bit and the second target bit are set to different values.

In one subsidiary embodiment of the above subembodiment, the first information block and the second information block are two different entries in the first list, respectively.

In one subsidiary embodiment of the above subembodiment, the second target bit block being set as 0 is used to determine that the second information block is not indicated to perform a data transmission in the RRC_INACTIVE state.

In one subsidiary embodiment of the above subembodiment, the second information block comprising the second identifier and the second target bit being set to 0 are used to determine that the first node is not indicated to perform a data transmission in the RRC_INACTIVE state.

In one subsidiary embodiment of the subembodiment, the second information block not being configured with the first indication refers to: the second target bit is set to 0.

In one subembodiment of the above embodiment, the second additional information block is an entry corresponding to the second information block in the first additional list; the first message comprises a first additional list, and the first additional list corresponds to the first list; the first additional information block is an entry corresponding to the first information block in the first additional list.

In one subsidiary embodiment of the subembodiment, the second additional information block does not comprise the first indication.

In one subsidiary embodiment of the subembodiment, the second additional information block is for the second information block.

In one subsidiary embodiment of the subembodiment, the second information block is an entry other than the first information block in the first list.

In one subsidiary embodiment of the subembodiment, the second additional information block is an entry other than the first additional information block in the first additional list.

In one subsidiary embodiment of the subembodiment, the second additional information block not comprising the first indication is used to determine that the second information block is not indicated to perform a data transmission in the RRC_INACTIVE state.

In one subsidiary embodiment of the subembodiment, the second information block comprising the second identifier and the second additional information block not comprising the first indication are used to determine that the first node is not indicated to perform a data transmission in the RRC_INACTIVE state.

In one subsidiary embodiment of the subembodiment, the second information block not being configured with the first indication refers to: the second additional information block does not comprise the first indication.

In one embodiment, the first message comprises a second list, the second list comprise Q2 entries, and the second information block is one entry in the second list.

In one subembodiment of the above embodiment, the first list is the first candidate list, and the second list is the second candidate list.

In one subembodiment of the above embodiment, the first list is the second candidate list, and the second list is the first candidate list.

In one embodiment, Q2 is not greater than at least one of maxNrofPageGroup, maxNrofPageGroup-R17, or maxNrofPageGroup-R18.

In one subembodiment of the above embodiment, Q2 is equal to 1.

In one subembodiment of the above embodiment, Q2 is not less than 1.

In one embodiment, each entry in the second list comprises a first-type identifier.

In one embodiment, each entry in the second list comprises a second-type identifier.

In one embodiment, if an entry in the second list comprises a first-type identifier, and the first-type identifier matches a fullI-RNTI stored in the first node, the first-type identifier is associated with the first node.

In one embodiment, if an entry in the second list comprises a second-type identifier, the first node joins in an MBS session indicated by the second-type identifier, and the second-type identifier is associated with the first node.

In one embodiment, the second information block does not comprise a second indication.

In one subembodiment of the above embodiment, whether an entry in the second list comprises the second indication is used to determine whether the entry is indicated to perform a data transmission in RRC_INACTIVE state.

In one subembodiment of the above embodiment, if an entry in the second list comprises the second indication, the entry is indicated to perform a data transmission in RRC_INACTIVE state; if an entry in the second list does not comprise the second indication, the entry is not indicated to perform a data transmission in RRC_INACTIVE state.

In one subembodiment of the above embodiment, the second information block not comprising a second indication is used to determine that the second information block is not indicated to perform a data transmission in the RRC_INACTIVE state.

In one subembodiment of the above embodiment, the second information block comprising the second identifier and not comprising the second indication are used to determine that the first node is not indicated to perform a data transmission in the RRC_INACTIVE state.

In one subembodiment of the above embodiment, the second information block not being configured the second indication refers to: the second information block does not comprise a second indication.

In one embodiment, the first message comprises a second bit map, and each entry in the second list corresponds to a bit in the second bit map; the second target bit is a bit corresponding to the second information block in the second bit map.

In one subembodiment of the embodiment, a size of the second bit map is variable.

In one subembodiment of the embodiment, the second bit map occupies Q2 bits.

In one subembodiment of the embodiment, a size of the second bit map is fixed.

In one subembodiment of the embodiment, the second bit map occupies the maxNrofPageRec bit(s).

In one subembodiment of the embodiment, a bit corresponding to an entry in the second list in the second bit map is used to determine whether the entry indicates performing a data transmission in RRC_INACTIVE state.

In one subembodiment of the embodiment, if a bit corresponding to an entry in the second list in the second bit map is set to 1, the entry is indicated to perform a data transmission in RRC_INACTIVE state; if a bit corresponding to an entry in the second list in the second bit map is set to 0, the entry is not indicated to perform a data transmission in RRC_INACTIVE state.

In one subembodiment of the embodiment, a position of an entry in the second list is used to determine a bit corresponding to the entry in the second bit map.

In one subembodiment of the embodiment, a position of an entry in the second list refers to an order of the entry in the second list.

In one subembodiment of the embodiment, a position of the second information block in the second list is used to determine a second target bit in the second bit map.

In one subembodiment of the embodiment, a position of the second information block in the second list refers to an order of the second sub-information block in the second list.

In one subembodiment of the embodiment, if the second information block is a q2-th entry in the second list, the second target bit is the q2-th bit in the second bit map.

In one subembodiment of the embodiment, the second target bit is set as 0.

In one subembodiment of the embodiment, the second target bit set to 0 is used to determine that the second information block is not indicated to perform a data transmission in the RRC_INACTIVE state.

In one subembodiment of the embodiment, the second information block comprising the second identifier and the second target bit being set to 0 are used to determine that the first node is not indicated to perform a data transmission in the RRC_INACTIVE state.

In one subembodiment of the above embodiment, the second information block not being configured with the second indication refers to: the second target bit is set to 0.

In one embodiment, the first message comprises a second additional list, and the second additional list corresponds to the second list; the second additional information block is an entry corresponding to the second information block in the second additional list.

In one subembodiment of the above embodiment, whether an entry in the second additional list comprises the second indication is used to determine whether an entry corresponding to the entry in the second additional list in the second list is indicated to perform a data transmission in RRC_INACTIVE state.

In one subembodiment of the above embodiment, if an entry in the second additional list comprises a second indication, an entry corresponding to the entry in the second additional list in the second list is indicated to perform a data transmission in RRC_INACTIVE state; if an entry in the second additional list does not comprise the second indication, an entry corresponding to the entry in the second additional list in the second list is not indicated to perform a data transmission in RRC_INACTIVE state.

In one subembodiment of the above embodiment, a number of entries in the second additional list is equal to a number of entries in the second list, and an order of entries in the second additional list is the same as an order of entries in the second list.

In one subembodiment of the above embodiment, the second information block is a q2nd entry in the second list, and the second additional information block is the q2nd entry in the second additional list, q2 being a positive integer not greater than Q2.

In one subembodiment of the embodiment, the second additional information block is for the second information block.

In one subembodiment of the embodiment, the second additional information block does not comprise the second indication.

In one subembodiment of the embodiment, the second additional information block not comprising the second indication is used to determine that the second information block is not indicated to perform a data transmission in the RRC_INACTIVE state.

In one subembodiment of the above embodiment, the second information block comprising the second identifier and the second additional information block not comprising the second indication are used to determine that the first node is not indicated to perform a data transmission in the RRC_INACTIVE state.

In one subembodiment of the above embodiment, the second information block not being configured with the second indication refers to: the second additional information block does not comprise the second indication.

In one embodiment, the second information block is an entry in the first list, or, the second information block is an entry in the second list.

In one embodiment, the second information block is an entry in any list in the first list or the second list.

In one embodiment, the first candidate list is used for paging for multicast.

In one subembodiment of the embodiment, a name of the first candidate list includes at least one of Paging, Group, List, MBS, or r18.

In one subembodiment of the embodiment, a name of the first candidate list is PagingGroupList or Paging GroupList-r17 or PagingGroupList-r18.

In one subembodiment of the embodiment, a name of each entry in the first candidate list includes at least one of Paging, Group, multi, MBS, TMGI, or r18.

In one subembodiment of the embodiment, a name of each entry in the first candidate list is PagingGroup-r18.

In one subembodiment of the embodiment, a name of each entry in the first candidate list is TMGI or TMGI-r18.

In one subembodiment of the embodiment, each entry in the first candidate list has a same name.

In one subembodiment of the embodiment, each entry in the first candidate list indicates a TMGI.

In one embodiment, the second candidate list is used for paging for unicast.

In one subembodiment of the embodiment, a name of the second candidate list includes at least one of Paging, Record, List, MBS, or r18.

In one subembodiment of the embodiment, a name of the second candidate list is PagingRecordList or PagingRecordList-R17 or PagingRecordList-R18.

In one subembodiment of the embodiment, a name of each entry in the second candidate list includes at least one of Paging, Record, or r18.

In one subembodiment of the embodiment, a name of each entry in the second candidate list is PagingRecord-r18 or PagingRecord.

In one subembodiment of the embodiment, each entry in the second candidate list comprises a user identifier, and a user identifier comprised in each entry in the first list except for the first sub-information block is any of NG-5G-S-TMSI or I-RNTI-Value.

In one subembodiment of the embodiment, each entry in the second candidate list has a same name.

In one embodiment, a first candidate additional list is for the first candidate list.

In one subembodiment of the embodiment, a name of the first candidate additional list includes at least one of Paging, Group, List, MBS, or r18.

In one subembodiment of the embodiment, a name of the first candidate additional list is PagingGroupList or PagingGroupList-r17 or PagingGroupList-r18.

In one subembodiment of the embodiment, a name of each entry in the first candidate additional list includes at least one of Paging, Group, multi, MBS, TMGI, or r18.

In one subembodiment of the embodiment, a name of each entry in the first candidate additional list is PagingGroup-r18.

In one subembodiment of the embodiment, a name of each entry in the first candidate additional list is TMGI or TMGI-r18.

In one subembodiment of the embodiment, each entry in the first candidate additional list has a same name.

In one subembodiment of the embodiment, each entry in the first candidate additional list indicates a TMGI.

In one embodiment, a second candidate additional list is used for the second candidate list.

In one subembodiment of the embodiment, a name of the second candidate additional list includes at least one of Paging, Record, List, MBS, or r18.

In one subembodiment of the embodiment, a name of the second candidate additional list is PagingRecordList or PagingRecordList-R17 or PagingRecordList-R18.

In one subembodiment of the embodiment, a name of each entry in the second candidate additional list includes at least one of Paging, Record, or r18.

In one subembodiment of the embodiment, a name of each entry in the second candidate additional list is PagingRecord-r18 or PagingRecord.

In one subembodiment of the embodiment, each entry in the second candidate additional list comprises a user identifier, and a user identifier comprised in each entry in the second list except for the second sub-information block is any of NG-5G-S-TMSI or I-RNTI-Value.

In one subembodiment of the embodiment, each entry in the second candidate additional list has a same name.

In one embodiment, the first list is used for paging for unicast; the second list is used for paging for multicast.

In one embodiment, the first list is used for paging for multicast; the second list is used for paging for unicast.

In one embodiment, the first list is used for paging for multicast; the second list is used for paging for multicast.

In one embodiment, the first list is used for paging for unicast; the second list is used for paging for unicast.

In one embodiment, the first message comprises a first list and a first additional list; the first list is used for paging for multicast.

In one subembodiment of the embodiment, a name of the first additional list comprises at least one of Paging, Group, List, MBS, r1800, or r18.

In one subembodiment of the embodiment, a name of the first additional list is Paging GroupList-r1800.

In one subembodiment of the embodiment, a name of each entry in the first additional list includes at least one of Paging, Group, MBS, r1800, or r18.

In one subembodiment of the embodiment, a name of each entry in the first additional list is Paging Group-R1800 or PagingGroup-R1801 or Paging Group-R1802.

In one subembodiment of the embodiment, each entry in the first additional list has a same name.

In one embodiment, the first message comprises a first list and a first additional list; the first list is used for paging for unicast.

In one subembodiment of the embodiment, a name of the first additional list includes at least one of Paging, Record, List, SDT, r1800, or r18.

In one subembodiment of the embodiment, a name of the first additional list is PagingRecordList-r1800.

In one subembodiment of the embodiment, a name of each entry in the first additional list includes at least one of Paging, Record, SDT, r1800, or r18.

In one subembodiment of the embodiment, a name of each entry in the first additional list is PagingRecord-r1800.

In one subembodiment of the embodiment, each entry in the first additional list has a same name.

In one embodiment, a name of an RRC field to which the first indication belongs is different from a name of an RRC field to which the second indication belongs.

In one embodiment, a name of an RRC field to which the first indication belongs is the same as a name of an RRC field to which the second indication belongs, and a value of an RRC field to which the first indication belongs is different from a value of an RRC field to which the second indication belongs.

In one embodiment, a name of an RRC field to which the first indication belongs is different from a name of an RRC field to which the second indication belongs, and a value of an RRC field to which the first indication belongs is different from a value of an RRC field to which the second indication belongs.

In one embodiment, the first indication comprises an RRC field.

In one subembodiment of the above embodiment, the first indication is an RRC field.

In one subembodiment of the above embodiment, the first indication is a value of an RRC field.

In one subembodiment of the above embodiment, a name of the RRC field includes at least one of Paging, Cause, r1800, or r18.

In one subembodiment of the above embodiment, a value of the RRC field is a string.

In one subembodiment of the above embodiment, a value of the RRC field includes at least one of mt, SDT, inactive, Data, Trans, Transmission, i, I, - r18, or r1800.

In one subembodiment of the above embodiment, a value of the RRC field includes at least one of MBS, inactive, IMBS, i, I, r1800, or - r18.

In one subembodiment of the above embodiment, the first indication is a bit in a RRC field.

In one subembodiment of the above embodiment, the RRC field comprises a bit map.

In one subembodiment of the above embodiment, the RRC field comprises a bit string.

In one embodiment, the "as a response to the first message is received" includes: if the first message is received.

In one embodiment, the "as a response to the first message is received" includes: when the first message is received.

In one embodiment, the "as a response to the first message is received" includes: after the first message is received.

In one embodiment, data transmission in the RRC_INACTIVE state includes: unicast transmission in the RRC_INACTIVE state.

In one subembodiment of the embodiment, the "unicast transmission in the RRC_INACTIVE state" includes: transmitting at least one of unicast data or unicast signaling in the RRC_INACTIVE state.

In one subembodiment of the embodiment, the "unicast transmission in the RRC_INACTIVE state" includes: transmitting unicast data or a unicast signaling in the RRC_INACTIVE state.

In one subembodiment of the embodiment, the "unicast transmission in the RRC_INACTIVE state" includes: receiving at least one of unicast data or a unicast signaling in the RRC_INACTIVE state.

In one subembodiment of the embodiment, the "unicast transmission in the RRC_INACTIVE state" includes: receiving at least one of unicast data or a unicast signaling in the RRC_INACTIVE state, or transmitting at least one of unicast data or a unicast signaling in the RRC_INACTIVE state.

In one subembodiment of the embodiment, the "unicast transmission in the RRC_INACTIVE state" includes: receiving at least one of unicast data or a unicast signaling in the RRC_INACTIVE state, or/and transmitting at least one of unicast data or a unicast signaling in the RRC_INACTIVE state.

In one subembodiment of the embodiment, the "unicast transmission in the RRC_INACTIVE state" includes: receiving or/ and transmitting at least one of unicast data or a unicast signaling in the RRC_INACTIVE state.

In one subembodiment of the embodiment, the "unicast transmission in the RRC_INACTIVE state" includes: MT-SDT.

In one subembodiment of the embodiment, the "unicast transmission in the RRC_INACTIVE state" includes: SDT.

In one subembodiment of the embodiment, the unicast data refers to data transmitted through DRB.

In one subembodiment of the embodiment, the unicast signaling refers to a signaling transmitted through SRB.

In one embodiment, data transmission in the RRC_INACTIVE state includes: multicast transmission in the RRC_INACTIVE state.

In one embodiment, the "multicast transmission in the RRC_INACTIVE state" includes: transmitting at least one of multicast data or a multicast signaling in the RRC_INACTIVE state.

In one subembodiment of the embodiment, the "multicast transmission in the RRC_INACTIVE state" includes: transmitting multicast data or a multicast signaling in the RRC_INACTIVE state.

In one subembodiment of the embodiment, the "multicast transmission in the RRC_INACTIVE state" includes: receiving at least one of multicast data or a multicast signaling in the RRC_INACTIVE state.

In one subembodiment of the embodiment, the "multicast transmission in the RRC_INACTIVE state" includes: receiving at least one of multicast data or a multicast signaling in the RRC_INACTIVE state, or transmitting at least one of multicast data or a multicast signaling in the RRC_INACTIVE state.

In one subembodiment of the embodiment, the "multicast transmission in the RRC_INACTIVE state" includes: receiving at least one of multicast data or a multicast signaling in the RRC_INACTIVE state, or/ and transmitting at least one of multicast data or a multicast signaling in the RRC_INACTIVE state.

In one subembodiment of the embodiment, the "multicast transmission in the RRC_INACTIVE state" includes: receiving or/ and transmitting at least one of multicast data or a multicast signaling in the RRC_INACTIVE state.

In one subembodiment of the embodiment, the multicast data refers to data transmitted through a multicast MRB.

In one subembodiment of the embodiment, the multicast signaling refers to a signaling transmitted through a multicast MRB.

In one embodiment, if the first identifier is used to indicate the first node, data transmission in the RRC_INACTIVE state includes: transmitting at least one of unicast data or a unicast signaling in the RRC_INACTIVE state.

In one embodiment, if the first identifier indicates an MBS session in which the first node joins, a data transmission in the RRC_INACTIVE state includes: transmitting at least one of multicast data or a multicast signaling in the RRC_INACTIVE state.

In one embodiment, the phrase that "the first information block indicates that the first node performs a data transmission in RRC_INACTIVE state" refers to: the first information block indicates that the first node performs a unicast transmission in the RRC_INACTIVE state; herein, the first identifier is used to indicate the first node.

In one embodiment, the phrase that "the first information block indicates that the first node performs a data transmission in RRC_INACTIVE state" refers to: the first information block indicates that the first node performs a multicast transmission in the RRC_INACTIVE state; herein, the first identifier indicates an MBS session in which the first node joins.

In one embodiment, the phrase that "the second information block does not indicate that the first node performs a data transmission in the RRC_INACTIVE state" refers to: the second information block does not indicate that the first node performs a unicast transmission in the RRC_INACTIVE state; herein, the second identifier is used to indicate the first node.

In one embodiment, the phrase that "the second information block does not indicate that the first node performs a data transmission in the RRC_INACTIVE state" refers to: the second information block does not indicate that the first node performs a multicast transmission in the RRC_INACTIVE state; herein, the second identifier indicates an MBS session in which the first node joins.

In one embodiment, the phrase that "the second information block does not indicate that the first node performs a data transmission in the RRC_INACTIVE state" refers to: the second information block does not indicate the first node to perform a unicast transmission in the RRC_INACTIVE state, and the second information block does not indicate the first node to perform a multicast transmission in the RRC_INACTIVE state.

In one embodiment, the first information block indicates transmitting at least one of multicast data or a multicast signaling in the RRC_INACTIVE state, and the second information block indicates transmitting at least one of unicast data or a unicast signaling in the RRC_INACTIVE state; the first identifier indicates an MBS session in which the first node joins, and the second identifier is used to indicate the first node.

In one embodiment, the first information block indicates transmitting at least one of unicast data or a unicast signaling in the RRC_INACTIVE state, and the second information block indicates transmitting at least one of multicast data or a multicast signaling in the RRC_INACTIVE state; the first identifier is used to indicate the first node, and the second identifier indicates an MBS session in which the first node joins.

In one embodiment, the first information block indicates transmitting at least one of multicast data or a multicast signaling in the RRC_INACTIVE state, and the second information block indicates transmitting at least one of multicast data or a multicast signaling in the RRC_INACTIVE state; the first identifier indicates an MBS session in which the first node joins, and the second identifier indicates another MBS session in which the first node joins.

In one embodiment, the "determining an execution of a data transmission in the RRC_INACTIVE state" includes: determining to transmit data or a signaling through at least one radio bearer in the first radio bearer set in the RRC_INACTIVE state.

In one embodiment, the "determining an execution of a data transmission in the RRC_INACTIVE state" includes: determining to initiate a data transmission in the RRC_INACTIVE state.

In one embodiment, the "determining an execution of a data transmission in the RRC_INACTIVE state" includes: determining to initiate a random access procedure using random access resources of an RA (Random Access)-SDT.

In one embodiment, the "determining an execution of a data transmission in the RRC_INACTIVE state" includes: determining to initiate a random access procedure using random access resources of a CG-SDT.

In one embodiment, the "determining an execution of a data transmission in the RRC_INACTIVE state" includes: determining to initiate and execute the SDT procedure.

In one embodiment, the "determining an execution of a data transmission in the RRC_INACTIVE state" includes: determining to initiate and perform the MT-SDT procedure.

In one embodiment, the first node receives a Paging message, the Paging message comprises a PagingRecordList, if a ue-Identity in a PagingRecord in the PagingRecordList matches a fullI-RNTI stored in the first node, and the PagingRecord is indicated to perform a data transmission in RRC_INACTIVE state, and the first message comprises a pagingGroupList, and the first node joins in an MBS session indicated by a TMGI in a pagingGroupList, and the TMGI is not indicated to perform a data transmission in the RRC_INACTIVE state, and it is determined that a data transmission in the RRC_INACTIVE state is not performed.

In one embodiment, the first node receives a Paging message, the Paging message comprises a PagingGroupList, if the first node joins in an MBS session indicated by a TMGI in the PagingGroupList and the TMGI is indicated to perform a data transmission in RRC_INACTIVE state, and the first node joins in an MBS session indicated by another TMGI in a pagingGroupList, and the another TMGI is not indicated to perform a data transmission in the RRC_INACTIVE state, it is determined that a data transmission in the RRC_INACTIVE state is not performed.

In one embodiment, the first node receives a Paging message, the Paging message comprises a PagingGroupList, if the first node joins in an MBS session indicated by a TMGI in the PagingGroupList and the TMGI is indicated to perform a data transmission in RRC_INACTIVE state, and the first message comprises a pagingRecordList, and a ue-Identity in a PagingRecord in the pagingRecordList matches a fullI-RNTI stored in the first node, and the PagingRecord is not indicated to perform a data transmission in the RRC_INACTIVE state, it is determined that a data transmission in the RRC_INACTIVE state is not performed.

In one embodiment, the first node supports an MT-SDT.

In one embodiment, the first node supports receiving a multicast MBS in RRC_INACTIVE state.

In one embodiment, a type of the first identifier is the same as a type of the second identifier.

In one embodiment, a type of the first identifier is different from a type of the second identifier.

In one embodiment, a priority of a radio bearer associated with the first identifier is the same as a priority of a radio bearer associated with the second identifier.

In one embodiment, a priority of a radio bearer associated with the first identifier is different from a priority of a radio bearer associated with the second identifier.

In one embodiment, before the first message is received, a target message is received; the target message indicates that the first node enters or maintains the RRC_INACTIVE state.

In one embodiment, the target message is an RRCRelease message.

In one embodiment, within a time interval from the target message being received to the first message being received, the first node remains in RRC_INACTIVE state.

In one embodiment, within a time interval from the target message being received to the first message being received, the first node does not transmit an RRC message through any one of CCCH or CCCH1.

In one embodiment, the target message is an RRCRelease message, and the RRCRelease message includes SuspendConfig.

In one embodiment, SuspendConfig in the target message comprises a first target field.

In one embodiment, the first target field is sdt-Config or sdt-config-r17 or sdt-config-r18.

In one embodiment, the first target field is used to configure an SDT.

In one embodiment, the first target field is set as Setup.

In one embodiment, the first target field is set as Release.

In one embodiment, SuspendConfig in the target message does not comprise the first target field.

### Embodiment 1B

Embodiment 1B illustrates a flowchart of transmission of a first message according to one embodiment of the present application, as shown in FIG. 1B. In FIG. 1B, each box represents a step. It should be noted particularly that the order in which the boxes are arranged does not imply a chronological sequence of each step respectively marked.

In embodiment 1B, a first node in the present application in step 101B, receives a first message, the first message comprises at least a first information block, the first information block comprises at least a first identifier, the first identifier is associated with the first node, the first information block is indicated to perform data transmission in RRC_INACTIVE state; in step 102B, as a response to the first message being received, determines performing a data transmission in the RRC_INACTIVE state; as a response to determining performing a data transmission in the RRC_INACTIVE state, transmits a second message; accompanying the second message, resumes each radio bearer in a first radio bearer set; herein, the second message is used to request resuming an RRC connection; the first radio bearer set comprises at least one of at least one DRB of the first node, or an SRB2 of the first node, or at least one multicast MRB of the first node; within a time interval from the first message being received to each radio bearer in the first radio bearer set being resumed, the first node does not receive any RRC message indicating that the first node resumes an RRC connection.

In one embodiment, the first identifier is used to indicate the first node, and the first message does not comprise an identifier indicating an MBS session in which the first node joins.

In one subembodiment of the embodiment, the first radio bearer set comprises all DRBs of the first node U01.

In one subembodiment of the embodiment, the first radio bearer set comprises all DRBs of the first node U01 and SRB2 of the first node U01.

In one subembodiment of the embodiment, the first radio bearer set comprises at least one of at least one DRB of the first node or SRB2 of the first node.

In one subembodiment of the embodiment, the first radio bearer set does not comprise at least one of DRB or SRB2.

In one subembodiment of the embodiment, the first message indicates at least one radio bearer in the first radio bearer set.

In one subembodiment of the embodiment, the target message indicates at least one radio bearer in the first radio bearer set.

In one subembodiment of the embodiment, SIB1 (System Information Block 1) message indicates at least one radio bearer in the first radio bearer set.

In one embodiment, at least one of the first message, the target message, or the SIB1 indicates at least one radio bearer in the first radio bearer set.

In one embodiment, the first identifier indicates an MBS session in which the first node joins, and the first message does not comprise an identifier indicating the first node.

In one subembodiment of the embodiment, the first radio bearer set comprises all multicast MRBs of the first node U01.

In one subembodiment of the embodiment, the first radio bearer set comprises at least one multicast MRB of the first node.

In one subembodiment of the embodiment, the first radio bearer set comprises at least one of at least one multicast MRB of the first node or SRB2 of the first node.

In one subembodiment of the embodiment, the first radio bearer set does not comprise at least one of a multicast MRB or SRB2.

In one subembodiment of the embodiment, the first message indicates at least one radio bearer in the first radio bearer set.

In one subembodiment of the embodiment, the target message indicates at least one radio bearer in the first radio bearer set.

In one subembodiment of the embodiment, SIB1 message indicates at least one radio bearer in the first radio bearer set.

In one subembodiment of the embodiment, at least one of the first message, the target message, or the SIB1 indicates at least one radio bearer in the first radio bearer set.

In one embodiment, the first information block is explicitly indicated to perform a data transmission in the RRC_INACTIVE state.

In one embodiment, the first information block is implicitly indicated to perform a data transmission in the RRC_INACTIVE state.

In one embodiment, a field in the first information block is used to determine that the first information block is indicated to perform a data transmission in the RRC_INACTIVE state.

In one embodiment, CG-SDT resources are configured to determine that the first information block is indicated to perform a data transmission in the RRC_INACTIVE state.

In one embodiment, random access resources used to indicate SDT are configured to determine that the first information block is indicated to perform a data transmission in the RRC_INACTIVE state.

In one embodiment, the first message indicating that at least one radio bearer in the first radio bearer set is used to determine that the first information block is indicated to perform a data transmission in the RRC_INACTIVE state.

In one embodiment, the target message indicating that at least one radio bearer in the first radio bearer set is used to determine that the first information block is indicated to perform a data transmission in the RRC_INACTIVE state.

In one embodiment, the first information block being configured with a first indication is used to determine that the first information block is indicated to perform a data transmission in the RRC_INACTIVE state.

### Embodiment 2

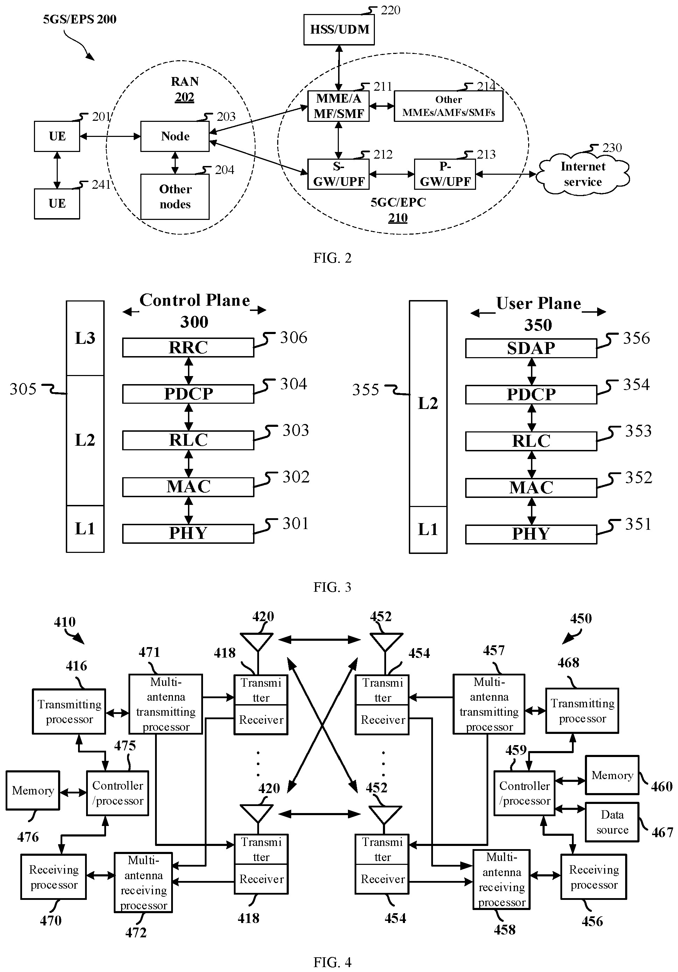

Embodiment 2 illustrates a schematic diagram of a network architecture according to one embodiment of the present application, as shown in FIG. 2. FIG. 2 is a diagram illustrating a network architecture 200 of 5G NR/ Long-Term Evolution (LTE)/ Long-Term Evolution Advanced (LTE-A) systems. The 5G NR/ LTE/ LTE-A network architecture 200 may be called a 5G System (5GS)/Evolved Packet System (EPS) 200 or other appropriate terms. The 5GS/EPS 200 comprises at least one of a UE 201, an RAN 202, a 5G Core Network/Evolved Packet Core (5GC/EPC) 210, a Home Subscriber Server (HSS)/ Unified Data Management (UDM) 220 or an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will readily understand that various concepts presented throughout the present application can be extended to networks providing circuit switching services or other cellular networks. The RAN comprises the node 203 and other nodes 204. The node 203 provides UE 201-oriented user plane and control plane protocol terminations. The node 203 may be connected to other nodes 204 via an Xn interface (e. g., backhaul)/X2 interface. The node 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The node 203 provides an access point of the 5GC/EPC 210 for the UE 201. Examples of the UE 201 include cellular phones, smart phones, Session Initiation Protocol (SIP) phones, laptop computers, Personal Digital Assistant (PDA), satellite Radios, non-terrestrial base station communications, Satellite Mobile Communications, Global Positioning Systems (GPS), multimedia devices, video devices, digital audio players (for example, MP3 players), cameras, game consoles, unmanned aerial vehicles (UAV), aircrafts, narrow-band Internet of Things (loT) devices, machine-type communication devices, land vehicles, automobiles, wearable devices, or any other similar functional devices. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The node 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/ AMFs/ SMFs 214, a Service Gateway (S-GW)/ User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212, the S-GW/UPF 212 is connected to the P-GW/UPF 213. The P-GW provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming Services (PSS).

In one embodiment, the UE 201 corresponds to the first node in the present application.

In one embodiment, the UE 201 is a UE.

In one embodiment, the node 203 corresponds to the second node in the present application.

In one embodiment, the node 203 is a BaseStation (BS).

In one embodiment, the node 203 is a UE.

In one embodiment, the node 203 is a relay.

In one embodiment, the node 203 is a gateway.

In one embodiment, the node 204 corresponds to the third node in the present application.

In one embodiment, the node 204 corresponds to the fourth node in the present application.

In one embodiment, the node 204 is a base station.

In one embodiment, the node 204 is a UE.

In one embodiment, the node 204 is a relay.

In one embodiment, the node 204 is a gateway.

In one embodiment, the node 203 and the node 204 are in connection via an ideal backhaul.

In one embodiment, the node 203 and the node 204 are in connection via a non-ideal backhaul.

In one embodiment, the node 203 and the node 204 provides radio resources for the UE 201 at the same time.

In one embodiment, the node 203 and the node 204 do not provide radio resources for the UE 201 at the same time.

In one embodiment, the node 203 and the node 204 are a same node.

In one embodiment, the node 203 and the node 204 are two different nodes.

In one embodiment, types of the node 203 and the node 204 are the same.

In one embodiment, types of the node 203 and the node 204 are different.

In one embodiment, the UE supports Terrestrial Network (TN) transmission.

In one embodiment, the UE supports Non-Terrestrial Network (NTN) transmission.

In one embodiment, the UE supports communications within networks with large latency differences.

In one embodiment, the UE supports Dual Connection (DC) transmission.

In one embodiment, the UE comprises an aircraft.

In one embodiment, the UE comprises a vehicle terminal.

In one embodiment, the UE comprises a vessel.

In one embodiment, the UE comprises an Internet of Things (IoT) terminal.

In one embodiment, the UE comprises an Industrial Internet of Things (IIoT) terminal.

In one embodiment, the UE comprises a device supporting transmission with low-latency and high-reliability.

In one embodiment, the UE comprises test equipment.

In one embodiment, the UE comprises a signaling tester.

In one embodiment, the base station comprises a Base Transceiver Station (BTS).

In one embodiment, the base station comprises NodeB (NB).

In one embodiment, the base station comprises gNB.

In one embodiment, the base station comprises eNB.

In one embodiment, the base station comprises ng-eNB.

In one embodiment, the base station comprises en-gNB.

In one embodiment, the base station supports transmission over a non-terrestrial network.

In one embodiment, the base station supports transmission over networks with large latency differences.

In one embodiment, the base station supports transmission over a terrestrial network.

In one embodiment, the base station comprises a Marco Cellular base station.

In one embodiment, the base station comprises a Micro Cell base station.

In one embodiment, the base station comprises a Pico Cell base station.

In one embodiment, the base station comprises a Femtocell.

In one embodiment, the base station comprises a base station supporting large latency differences.

In one embodiment, the base station comprises flight platform equipment.

In one embodiment, the base station comprises satellite equipment.

In one embodiment, the base station comprises a Transmitter Receiver Point (TRP).

In one embodiment, the base station comprises a Centralized Unit (CU).

In one embodiment, the base station comprises a Distributed Unit (DU).

In one embodiment, the base station comprises test equipment.

In one embodiment, the base station comprises a signaling tester.

In one embodiment, the base station comprises an Integrated Access and Backhaul (IAB)-node.

In one embodiment, the base station comprises an IAB-donor.

In one embodiment, the base station comprises an IAB-donor-CU.

In one embodiment, the base station comprises an IAB-donor-DU.

In one embodiment, the base station comprises an IAB-DU.

In one embodiment, the base station comprises an IAB-MT.

In one embodiment, the relay comprises a relay.

In one embodiment, the relay comprises an L3 relay.

In one embodiment, the relay comprises an L2 relay.

In one embodiment, the relay comprises a router.

In one embodiment, the relay comprises a switch.

In one embodiment, the relay comprises a UE.

In one embodiment, the relay comprises a base station.

### Embodiment 3

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for the control plane 300 is represented by three layers, which are a layer 1, a layer 2 and a layer 3, respectively. The layer 1 (L1) is the lowest layer and performs signal processing functions of various PHY layers. The L1 is called PHY 301 in the present application. L2 305, above the PHY 301, comprises a Medium Access Control (MAC) sublayer 302, a Radio Link Control (RLC) sublayer 303 and a Packet Data Convergence Protocol (PDCP) sublayer 304. The PDCP sublayer 304 provides multiplexing among variable radio bearers and logical channels. The PDCP sublayer 304 provides security by encrypting a data packet and provides support for handover. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating various radio resources (i.e., resources block) in a cell. The MAC sublayer 302 is also in charge of HARQ operation. The RRC sublayer 306 in L3 layer of the control plane 300 is responsible for acquiring radio resources (i.e., radio bearer) and configuring the lower layer with an RRC signaling. The radio protocol architecture of the user plane 350 comprises layer 1 (L1) and layer 2 (L2). In the user plane 350, the radio protocol architecture is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic.

In one embodiment, the radio protocol architecture in FIG. 3 is applicable to the first node in the present application.

In one embodiment, the radio protocol architecture in FIG. 3 is applicable to the second node in the present application.

In one embodiment, the first message in the present application is generated by the RRC 306.

In one embodiment, the first message in the present application is generated by the MAC 302 or the MAC 352.

In one embodiment, the first message in the present application is generated by the PHY 301 or the PHY 351.

In one embodiment, the second message in the present application is generated by the RRC 306.

In one embodiment, the second message in the present application is generated by the MAC 302 or the MAC 352.

In one embodiment, the second message in the present application is generated by the PHY 301 or the PHY 351.

In one embodiment, the third message in the present application is generated by the RRC 306.

In one embodiment, the third message in the present application is generated by the MAC 302 or the MAC 352.

In one embodiment, the third message in the present application is generated by the PHY 301 or the PHY 351.

### Embodiment 4

Embodiment 4 illustrates a schematic diagram of a first communication device and a second communication device in the present application, as shown in FIG. 4. FIG. 4 is a block diagram of a first communication device 450 in communications with a second communication device 410 in an access network.

The first communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/ processor 475, a memory 476, a receiving processor 470, a transmitting processor 416, a multi-antenna receiving processor 472, a multi-antenna transmitting processor 471, a transmitter/ receiver 418 and an antenna 420.

In a transmission from the second communication device 410 to the first communication device 450, at the first communication device 410, a higher layer packet from the core network is provided to a controller/ processor 475. The controller/processor 475 provides a function of the L2 layer. In the transmission from the second communication device 410 to the first communication device 450, the controller/ processor 475 provides header compression, encryption, packet segmentation and reordering, and multiplexing between a logical channel and a transport channel, and radio resources allocation for the first communication device 450 based on various priorities. The controller/ processor 475 is also responsible for retransmission of a lost packet and a signaling to the first communication device 450. The transmitting processor 416 and the multi-antenna transmitting processor 471 perform various signal processing functions used for the L1 layer (that is, PHY). The transmitting processor 416 performs coding and interleaving so as to ensure an FEC (Forward Error Correction) at the second communication device 410 side, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and non-codebook-based precoding, and beamforming on encoded and modulated symbols to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multi-carrier symbol streams. After that the multi-antenna transmitting processor 471 performs transmission analog precoding/beamforming on the time-domain multi-carrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the second communication device 410 to the first communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/ beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any the first communication device-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted on the physical channel by the second communication node 410. Next, the higher-layer data and control signal are provided to the controller/processor 459. The controller/processor 459 performs functions of the L2 layer. The controller/processor 459 can be connected to a memory 460 that stores program code and data. The memory 460 can be called a computer readable medium. In the transmission from the second communication device 410 to the second communication device 450, the controller/ processor 459 provides demultiplexing between a transport channel and a logical channel, packet reassembling, decryption, header decompression and control signal processing so as to recover a higher-layer packet from the core network. The higher-layer packet is later provided to all protocol layers above the L2 layer, or various control signals can be provided to the L3 layer for processing.

In a transmission from the first communication device 450 to the second communication device 410, at the second communication device 450, the data source 467 is configured to provide a higher-layer packet to the controller/processor 459. The data source 467 represents all protocol layers above the L2 layer. Similar to a transmitting function of the second communication device 410 described in the transmission from the second communication device 410 to the first communication device 450, the controller/processor 459 performs header compression, encryption, packet segmentation and reordering, and multiplexing between a logical channel and a transport channel based on radio resources allocation so as to provide the L2 layer functions used for the user plane and the control plane. The controller/processor 459 is also responsible for retransmission of a lost packet, and a signaling to the second communication device 410. The transmitting processor 468 performs modulation mapping and channel coding. The multi-antenna transmitting processor 457 implements digital multi-antenna spatial precoding, including codebook-based precoding and non-codebook-based precoding, as well as beamforming. Following that, the generated spatial streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. In the transmission from the first communication device 450 to the second communication device 410, the controller/processor 475 provides de-multiplexing between a transport channel and a logical channel, packet reassembling, decryption, header decompression, control signal processing so as to recover a higher-layer packet from the UE 450. The higher-layer packet coming from the controller/processor 475 may be provided to the core network.

In one embodiment, the first communication device 450 comprises at least one processor and at least one memory. at least one processor and at least one memory. The at least one memory comprises computer program codes; the at least one memory and the computer program codes are configured to be used in collaboration with the at least one processor, the first communication device 450 at least: receives a first message, the first message comprises at least a first information block, the first information block comprises at least a first identifier, the first identifier is associated with the first node, the first information block is indicated to perform a data transmission in RRC_INACTIVE state; as a response to the first message being received, determines whether to perform a data transmission in the RRC_INACTIVE state according to whether a first condition set is satisfied; herein, the first condition set includes: the first message comprising a second information block, the second information block comprising at least a second identifier, the second identifier being associated with the first node, and the second information block not being indicated to perform a data transmission in the RRC_INACTIVE state; the behavior of determining whether to perform a data transmission in the RRC_INACTIVE state according to whether a first condition set is satisfied includes: if any condition in the first condition set is not satisfied, it is determined to perform a data transmission in the RRC_INACTIVE state; if each condition in the first condition set is satisfied, it is determined that a data transmission in the RRC_INACTIVE state is not performed.

In one embodiment, the first communication device 450 comprises at least one processor and at least one memory. a memory that stores a computer readable instruction program. The computer readable instruction program generates an action when executed by at least one processor. The action includes: receiving a first message, the first message comprising at least a first information block, the first information block comprising at least a first identifier, the first identifier being associated with the first node, the first information block being indicated to perform a data transmission in RRC_INACTIVE state; as a response to the first message being received, determining whether to perform a data transmission in the RRC_INACTIVE state according to whether a first condition set is satisfied; herein, the first condition set includes: the first message comprising a second information block, the second information block comprising at least a second identifier, the second identifier being associated with the first node, and the second information block not being indicated to perform a data transmission in the RRC_INACTIVE state; the behavior of determining whether to perform a data transmission in the RRC_INACTIVE state according to whether a first condition set is satisfied includes: if any condition in the first condition set is not satisfied, it is determined to perform a data transmission in the RRC_INACTIVE state; if each condition in the first condition set is satisfied, it is determined that a data transmission in the RRC_INACTIVE state is not performed.

In one embodiment, the second communication device 410 comprises at least one processor and at least one memory. The at least one memory comprises computer program codes; the at least one memory and the computer program codes are configured to be used in collaboration with the at least one processor. The second communication device 410 at least: transmits a first message, the first message comprises at least a first information block, the first information block comprises at least a first identifier, the first identifier is associated with a first node, the first information block is indicated to perform a data transmission in RRC_INACTIVE state; herein, the first node is a receiver of the first message; whether a first condition set is satisfied is used to determine whether a data transmission in the RRC_INACTIVE state is performed; the first condition set includes: the first message comprising a second information block, the second information block comprising at least a second identifier, the second identifier being associated with the first node, and the second information block not being indicated to perform a data transmission in the RRC_INACTIVE state; the phrase that whether a first condition set is satisfied is used to determine whether a data transmission in the RRC_INACTIVE state is performed includes: the first condition set being satisfied is used to determine that a data transmission in the RRC_INACTIVE state is performed; the first condition set not being satisfied is used to determine that a data transmission in the RRC_INACTIVE state is not performed.

In one embodiment, the second communication device 410 comprises a memory that stores a computer readable instruction program. The computer readable instruction program generates an action when executed by at least one processor. The action includes: transmitting a first message, the first message comprising at least a first information block, the first information block comprising at least a first identifier, the first identifier being associated with a first node, the first information block being indicated to perform a data transmission in RRC_INACTIVE state; herein, the first node is a receiver of the first message; whether a first condition set is satisfied is used to determine whether a data transmission in the RRC_INACTIVE state is performed; the first condition set includes: the first message comprising a second information block, the second information block comprising at least a second identifier, the second identifier being associated with the first node, and the second information block not being indicated to perform a data transmission in the RRC_INACTIVE state; the phrase that whether a first condition set is satisfied is used to determine whether a data transmission in the RRC_INACTIVE state is performed includes: the first condition set being satisfied is used to determine that a data transmission in the RRC_INACTIVE state is performed; the first condition set not being satisfied is used to determine that a data transmission in the RRC_INACTIVE state is not performed.

In one embodiment, the antenna 452, the receiver 454, the receiving processor 456, and the controller/processor 459 are used to receive a first message; at least one of the antenna 420, the transmitter 418, the transmitting processor 416, or the controller/processor 475 is used to transmit a first message.

In one embodiment, the antenna 452, the transmitter 454, the transmitting processor 468, and the controller/processor 459 are used to transmit a second message; at least one of the antenna 420, the receiver 418, the receiving processor 470, or the controller/processor 475 is used to receive a second message.

In one embodiment, the antenna 452, the receiver 454, the receiving processor 456, and the controller/processor 459 are used to receive a third message; at least one of the antenna 420, the transmitter 418, the transmitting processor 416, or the controller/processor 475 is used to transmit a third message.

In one embodiment, the first communication device 450 corresponds to a first node in the present application.

In one embodiment, the second communication device 410 corresponds to a second node in the present application.

In one embodiment, the first communication device 450 is a UE.

In one embodiment, the first communication device 450 is a UE that supports large delay differences.

In one embodiment, the first communication device 450 is a UE that supports NTN.

In one embodiment, the first communication device 450 is an aircraft device.

In one embodiment, the first communication device 450 has positioning capability.

In one embodiment, the first communication device 450 does not have positioning capability.

In one embodiment, the first communication device 450 is a UE that supports TN.

In one embodiment, the second communication device 410 is a base station (gNB/eNB/ng-eNB).

In one embodiment, the second communication device 410 is a base station that supports large delay differences.

In one embodiment, the second communication device 410 is a base station that supports NTN.

In one embodiment, the second communication device 410 is satellite equipment.

In one embodiment, the second communication device 410 is flying platform equipment.

In one embodiment, the second communication device 410 is a base station that supports TN.

### Embodiment 5

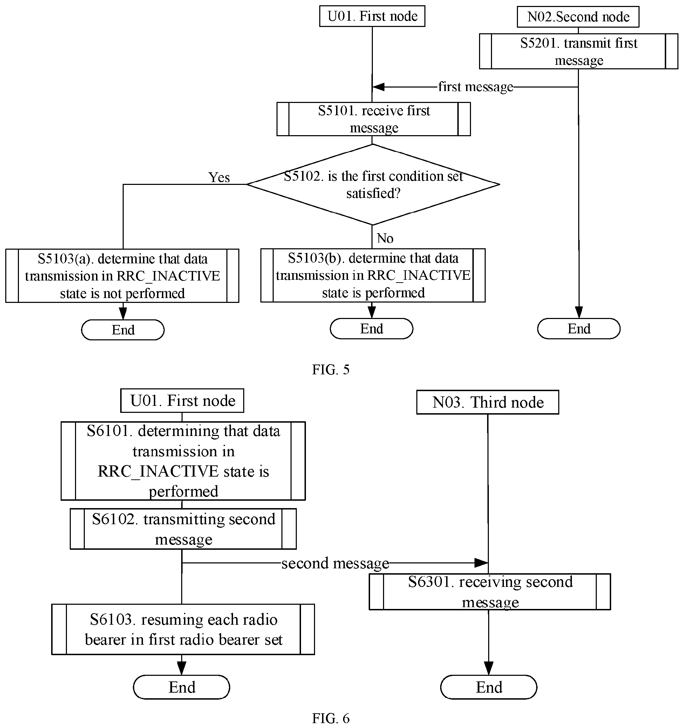

Embodiment 5 illustrates a flowchart of radio signal transmission according to one embodiment in the present application, as shown in FIG. 5. It is particularly underlined that the order illustrated in the embodiment does not put constraints over sequences of signal transmissions and implementations.

**The first node U01** receives a first message in step S5101; in step S5102, as a response to the first message being received, judges whether a first condition set is satisfied; if each condition in the first condition set is satisfied, enters step S5103(a); if any condition in the first condition set is satisfied, enters step S5103(b); in step S5103(a), determines that a data transmission in the RRC_INACTIVE state is not performed; in step S5103(b), determines executing data transmission in the RRC_INACTIVE state.

**The second node N02,** in step S5201, transmits the first message.

In embodiment 5, receives a first message, the first message comprises at least a first information block, the first information block comprises at least a first identifier, the first identifier is associated with the first node U01, the first information block is indicated to perform a data transmission in RRC_INACTIVE state; the first condition set includes: the first message comprising a second information block, the second information block comprising at least a second identifier, the second identifier being associated with the first node U01, and the second information block not being indicated to perform a data transmission in the RRC_INACTIVE state.

In embodiment 5, the behavior of determining whether to perform a data transmission in the RRC_INACTIVE state according to whether a first condition set is satisfied includes: if any condition in the first condition set is not satisfied, it is determined to perform a data transmission in the RRC_INACTIVE state; if each condition in the first condition set is satisfied, it is determined that a data transmission in the RRC_INACTIVE state is not performed.

In one embodiment, the first node U01 is a UE.

In one embodiment, the first node U01 is a base station.

In one embodiment, the first node U01 is a relay.

In one embodiment, the second node N02 is a base station.

In one embodiment, the second node N02 is a UE.

In one embodiment, the second node N02 is a relay.

In one embodiment, the second node is a maintenance base station of the first cell.

Typically, the first node U01 is a UE, and the second node N02 is a gNB.

### Embodiment 6

Embodiment 6 illustrates a flowchart of radio signal transmission according to another embodiment of the present application, as shown in FIG. 6. It is particularly underlined that the order illustrated in the embodiment does not put constraints over sequences of signal transmissions and implementations.

**The first node U01,** in step S6101, determines to perform a data transmission in the RRC_INACTIVE state; determines to perform a data transmission in the RRC_INACTIVE state in step S6102, transmits a second message; in step S6103, accompanying the second message, resumes each radio bearer in a first radio bearer set.

**The third node N03** receives the second message in step S6301.

In embodiment 6, the second message is used to request resuming an RRC connection; the first radio bearer set comprises at least one of at least one DRB of the first node U01, or SRB2 of the first node U01, or at least one multicast MRB of the first node U01; within a time interval from the first message being received to each radio bearer in the first radio bearer set being resumed, the first node U01 does not receive any RRC message indicating that the first node U01 resumes an RRC connection.

In one embodiment, the third node N03 is a base station.

In one embodiment, the third node N03 is a UE.

In one embodiment, the third node N03 is a relay.

Typically, the first node U01 is a UE, and the second node N02 is a gNB, and the third node N03 is a gNB.

In one embodiment, the third node N03 is the second node N02.

In one embodiment, the third node N03 is not the second node N02.

In one embodiment, the first message triggers the second message.

In one embodiment, the second message is a response for the first message.

In one embodiment, before determining an execution of a data transmission in the RRC_INACTIVE state, the first message is received, the first message comprises at least a first information block, the first information block comprises at least a first identifier, the first identifier is associated with the first node U01, the first information block is indicated to perform a data transmission in the RRC_INACTIVE state; any condition in the first condition set is not satisfied; the first condition set includes: the first message comprising a second information block, the second information block comprising at least a second identifier, the second identifier being associated with the first node U01, and the second information block not being indicated to perform a data transmission in the RRC_INACTIVE state.

In one embodiment, the step S6102 is taken before the step S6103.

In one embodiment, the step S6102 is taken after the step S6103.

In one embodiment, the first message triggers the second message.

In one embodiment, the second message is an RRC response for the first message.

In one embodiment, a determination of a data execution transmission in the RRC_INACTIVE state is used to determine transmitting a second message.

In one embodiment, before transmitting the second message, perform a unified access control (UAC) procedure and consider the access attempt as allowed.

In one embodiment, before transmitting the second message, a unified access control procedure is not executed.

In one embodiment, a determination of an execution of a data transmission in the RRC_INACTIVE state is triggered by the first message to determine that a unified access control procedure is not executed.

In one embodiment, the second message comprises at least the RRC connection resume request message.

In one embodiment, the second message is the RRC connection resume request message.

In one embodiment, the second message is an RRC message.

In one embodiment, the second message comprises at least RRC message.

In one embodiment, the second message comprises at least one RRC IE.

In one embodiment, the second message comprises at least one RRC field.

In one embodiment, the second message is transmitted through a Common Control Channel (CCCH), and the RRC connection resume request message is an RRCResumeRequest message.

In one embodiment, the second message is transmitted through CCCH1, and the RRC connection resume request message is an RRCResumeRequest1 message.

In one embodiment, the second message is transmitted through CCCH2, and the RRC connection resume request message is an RRCResumeRequest2 message.

In one embodiment, the second message is transmitted through a Signalling Radio Bearer0 (SRB0).

In one embodiment, the second message comprises a resumeIdentity field, and the resumeIdentity field is set as a bit string.

In one embodiment, the above bit string is a shortI-RNTI of the first node U01.

In one embodiment, the above bit string is a fullI-RNTI of the first node U01.

In one embodiment, the above bit string comprises 24 bits.

In one embodiment, the above bit string comprises 40 bits.

In one embodiment, the second message comprises a resumeMAC-I field, and the resumeMAC-I field is set as a bit string.

In one embodiment, the second message comprises a resumeCause field.

In one embodiment, a value of the resumeCause field in the second message is set to a string.

In one subembodiment of the embodiment, the string is one of mps-PriorityAccess, mcs-Priority Access, highPriority Access, or mt-Access.

In one subembodiment of the embodiment, the string is mt-Sdt.

In one subembodiment of the embodiment, a name of the string includes at least one of mt, SDT, Sdt, sdt, dl, DL, or Inactive.

In one subembodiment of the embodiment, the string is used to indicate performing a data transmission in RRC_INACTIVE state.

In one subembodiment of the embodiment, the string is used to indicate a unicast transmission in the RRC_INACTIVE state.

In one subembodiment of the embodiment, the string is used to indicate a multicast transmission in the RRC_INACTIVE state.

In one subembodiment of the embodiment, a name of the string includes at least one of MBS, mbs, Mbs, or Inactive.

In one embodiment, the second message is transmitted through Message 3 or MSGA in a random access procedure.

In one subembodiment of the embodiment, random access preamble resources in the random access procedure are not used to indicate SDT.

In one subsidiary embodiment of the subembodiment, random access preamble resources in the random access procedure are not configured through FeatureCombinationPreambles.

In one subembodiment of the embodiment, random access preamble resources in the random access procedure are used to indicate SDT.

In one subsidiary embodiment of the subembodiment, random access preamble resources in the random access procedure are configured through FeatureCombinationPreambles.

In one embodiment, the second message is transmitted through CG resources of CG-SDT.

In one subembodiment of the embodiment, the target message is used to determine the CG resources.

In one embodiment, accompanying the second message, re-establish a PDCP entity for each radio bearer in the first radio bearer set, and resume each radio bearer in the first radio bearer set.

In one embodiment, when a PDCP entity for each radio bearer in the first radio bearer set is re-established, no PDCP status report is triggered.

In one embodiment, the "accompanying the second message" refers to: before the second message is delivered by an RRC layer of the first node U01 to a lower layer of the RRC layer of the first node U01.

In one embodiment, the "accompanying the second message" refers to: after contents in the second message are set, and before the second message is delivered to a lower layer of the RRC layer.

In one embodiment, the "accompanying the second message" refers to: before the second message is transmitted.

In one embodiment, the "accompanying the second message" refers to: before the second message is transmitted at MAC layer.

In one embodiment, the "accompanying the second message" refers to: upon the second message is transmitted at MAC layer.

In one embodiment, the "accompanying the second message" refers to: at least before a confirmation message for the second message is received.

In one embodiment, the "accompanying the second message" refers to: when the second message is delivered to a lower layer of the RRC layer after a time interval.

In one embodiment, the "accompanying the second message" refers to: when a lower layer of the RRC layer transmits the second message for a first time.

In one embodiment, the "resuming each radio bearer in a first radio bearer set" includes: resuming all radio bearers in the first radio bearer set.

In one embodiment, the "resuming each radio bearer in a first radio bearer set" includes: if the first radio bearer set comprises at least one multicast MRB, resuming the at least one multicast MRB.

In one embodiment, the "resuming each radio bearer in a first radio bearer set" includes: if the first radio bearer set comprises at least one DRB, resuming the at least one DRB.

In one embodiment, the "resuming each radio bearer in a first radio bearer set" includes: if the first radio bearer set comprises SRB2, resuming the SRB2.

In one embodiment, before the second message is delivered by an RRC layer of the first node U01 to a lower layer of RRC layer of the first node U01, resume SRB1.

In one embodiment, accompanying the second message, a radio bearer suspended other than the SRB1, SRB0 and the first radio bearer set is not resumed.

In one embodiment, the first radio bearer set does not comprise SRB1 and SRB0.

In one embodiment, a radio bearer comprised in the first radio bearer set is explicitly indicated.

In one embodiment, a radio bearer comprised in the first radio bearer set is determined by the first node U01.

In one embodiment, a radio bearer comprised in the first radio bearer set is implicitly indicated.

In one embodiment, a number of radio bearer(s) comprised in the first radio bearer set is configurable.

In one embodiment, a type of a radio bearer comprised in the first radio bearer set is configurable.

In one embodiment, a radio bearer comprised in the first radio bearer set is indicated.

In one embodiment, a radio bearer comprised in the first radio bearer set is not indicated.

In one embodiment, the first radio bearer set comprises at least one of at least one DRB of the first node U01 or at least one multicast MRB of the first node U01.

In one embodiment, the first radio bearer set comprises at least one of at least one DRB of the first node U01 or SRB2 of the first node U01, and the first radio bearer set comprises at least one multicast MRB of the first node U01.

In one embodiment, the first radio bearer set comprises at least one of at least one DRB of the first node U01 or SRB2 of the first node U01, and the first radio bearer set comprises at least one multicast MRB of the first node.

In one embodiment, at least one DRB of the first node U01 comprises partial DRBs of the first node U01 or all DRBs of the first node U01.

In one embodiment, at least one multicast MRB of the first node U01 comprises partial multicast MRBs of the first node U01 or all multicast MRBs of the first node U01.

In one embodiment, the first radio bearer set comprises all DRBs of the first node U01.

In one embodiment, the first radio bearer set comprises all DRBs of the first node U01 and SRB2 of the first node U01.

In one embodiment, the first radio bearer set comprises all multicast MRBs of the first node U01.

In one embodiment, the first radio bearer set comprises a radio bearer associated with TMGI comprised in the first message.

In one embodiment, if a radio bearer is configured with a TMGI, the radio bearer is associated with the TMGI.

In one embodiment, the first message indicates at least one radio bearer in the first radio bearer set.

In one embodiment, the target message indicates at least one radio bearer in the first radio bearer set.

In one embodiment, SIB1 message indicates at least one radio bearer in the first radio bearer set.

In one embodiment, at least one of the first message, the target message, or the SIB1 indicates at least one radio bearer in the first radio bearer set.

In one embodiment, the "an RRC message indicating the first node U01 to resume an RRC connection" refers to RRCResume message.

In one embodiment, the "an RRC message indicating the first node U01 to resume an RRC connection" comprises at least RRCResume message.

In one embodiment, the "an RRC message indicating the first node U01 to resume an RRC connection" comprises any one of RRCResume message or RRCConnectionResume message.

In one embodiment, within a time interval from the first message being received and each radio bearer in the first radio bearer set being resumed, one of timer T319 or timer T319a or a first timer is started.

In one subembodiment of the embodiment, before initiating a transmission of the second message, start the timer in the timer T319, the timer T319a, or the first timer.

In one subembodiment of the embodiment, before the second message is submitted by the RRC layer of the first node U01 to a lower layer of the RRC layer of the first node U01, start the timer in the timer T319, the timer T319a, or the first timer.

In one subembodiment of the embodiment, when the second message is transmitted by a lower layer of the RRC layer of the first node U01 for the first time, start the timer in the timer T319, the timer T319a, or the first timer.

In one embodiment, the timer T319 is T319 in 3GPP TS 38.331.

In one embodiment, the timer T319a is T319a in 3GPP TS 38.331.

In one embodiment, the first timer is not T319, and the first timer is not T319a.

In one embodiment, the first timer is an RRC-layer timer.

In one embodiment, the first timer is T319b.

In one embodiment, the first timer is T319c.

In one embodiment, a name of the first timer includes T319.

In one embodiment, the first timer is a MAC-layer timer.

In one embodiment, within a time interval from the first message being received and each radio bearer in the first radio bearer set being resumed, any one of the timer T319, the timer T319a, or the first timer is not started.

### Embodiment 7

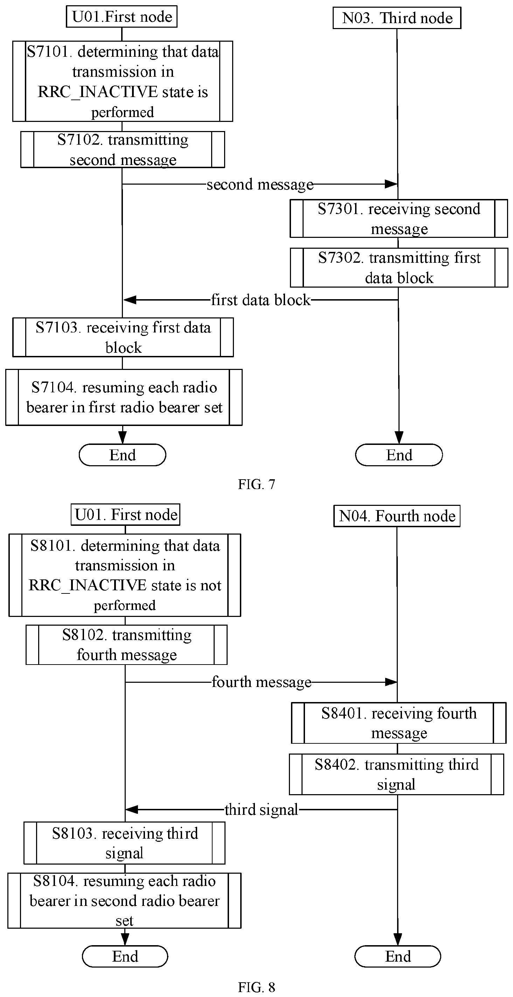

Embodiment 7 illustrates a flowchart of radio signal transmission according to another embodiment of the present application, as shown in FIG. 7. It is particularly underlined that the order illustrated in the embodiment does not put constraints over sequences of signal transmissions and implementations.

**The first node U01,** in step S7101, determines to perform a data transmission in the RRC_INACTIVE state; in step S7102, if it is determined to perform a data transmission in the RRC_INACTIVE state, transmits a second message; in step S7103, as a response to the second message being transmitted, receives a first data block; in step S7104, accompanying the first data block, resumes each radio bearer in a first radio bearer set.

**The third node N03** receives the second message in step S7301; in step S7302, transmits the first data block.

In embodiment 7, the second message is used to request resuming an RRC connection; the first radio bearer set comprises at least one of at least one DRB of the first node U01, or SRB2 of the first node U01, or at least one multicast MRB of the first node U01; within a time interval from the first message being received to each radio bearer in the first radio bearer set being resumed, the first node U01 does not receive any RRC message indicating that the first node U01 resumes an RRC connection.

In one embodiment, the first data block is a MAC Service Data Unit (SDU).

In one embodiment, the first data block is not a CCCH SDU.

In one embodiment, the first data block is a DTCH (Dedicated Traffic Channel) SDU.

In one embodiment, the first data block is an MTCH (MBS Traffic Channel) SDU.

In one embodiment, the first data block is a candidate SDU in a first candidate SDU set.

In one embodiment, the first candidate SDU set comprises at least a DTCH SDU.

In one embodiment, the first candidate SDU set comprises at least a MTCH SDU.

In one embodiment, the first candidate SDU set comprises a DCCH (Dedicated Control Channel) SDU.

In one embodiment, the first candidate SDU set comprises an MCCH (MBS Control Channel) SDU.

In one embodiment, the first candidate SDU set does not comprise a DCCH SDU.

In one embodiment, the first candidate SDU set does not comprise an MCCH SDU.

In one embodiment, the first candidate SDU set does not comprise a CCCH SDU.

In one embodiment, the behavior of resuming each radio bearer in a first radio bearer set is independent of whether the first candidate SDU comprises a CCCH SDU or an MCCH SDU.

In one embodiment, accompanying the first data block refers to: as a response to the first data block being received, the MAC layer of the first node U01 transmits a notification to an upper layer of the first node U01, when the RRC layer of the first node U01 receives the notification.

In one embodiment, accompanying the first data block refers to: when the first data block is received.

In one embodiment, accompanying the first data block refers to: after the first data block is received.

In one embodiment, accompanying the first data block refers to: if a MAC SDU corresponding to the second message is transmitted through message 3 or message A in a random access procedure, when the random access procedure is successfully completed.

In one embodiment, accompanying the first data block refers to: if a MAC SDU corresponding to the second message is transmitted through CG resources of CG-SDT procedure, when an initial transmission of the CG-SDT procedure is successfully completed.

In one embodiment, accompanying the first data block refers to: if a MAC SDU corresponding to the second message is transmitted through message 3 or message A in a random access procedure, as a response to the random access procedure being successfully completed, the MAC layer of the first node U01 transmits a notification to an upper layer of the first node U01, when the RRC layer of the first node U01 receives the notification.

In one embodiment, accompanying the first data block refers to: if a MAC SDU corresponding to the second message is transmitted through CG resources of CG-SDT procedure, as a response to an initial transmission of the CG-SDT procedure being successfully completed, the MAC layer of the first node U01 transmits a notification to an upper layer of the first node U01, when the RRC layer of the first node U01 receives the notification.

In one embodiment, the upper layer of the first node U01 comprises at least one of the RLC layer, PDCP layer, or RRC layer.

In one embodiment, accompanying the first data block, re-establish a PDCP entity for each radio bearer in the first radio bearer set, and resume each radio bearer in the first radio bearer set.

In one embodiment, when a PDCP entity for each radio bearer in the first radio bearer set is re-established, no PDCP status report is triggered.

In one embodiment, within a time interval from the first message being received to each radio bearer in the first radio bearer set being resumed, one of timer T319 or timer T319a or a first timer is started.

In one embodiment, within a time interval from the first message being received to each radio bearer in the first radio bearer set being resumed, any one of the timer T319, the timer T319a, or the first timer is not started.

### Embodiment 8

Embodiment 8 illustrates a flowchart of radio signal transmission according to another embodiment in the present application, as shown in FIG. 8. It is particularly underlined that the order illustrated in the embodiment does not put constraints over sequences of signal transmissions and implementations.

**The first node U01,** in step S8101, determines that a data transmission in the RRC_INACTIVE state is not performed; transmits a fourth message in step S8102; in step S8103, as a response to the fourth message being transmitted, receives a third message; in step S8104, as a response to the third message being received, resumes each radio bearer in a second radio bearer set.

**The fourth node N04,** in step S8401, receives the fourth message; in step S8402, transmits the third message.

In embodiment 8, the fourth message is used to request resuming an RRC connection; the second radio bearer set comprises at least one of all DRBs of the first node U01 or all multicast MRBs of the first node U01; within a time interval from the first message being received to the third message being received, any radio bearer in the second radio bearer set is not resumed; the third message indicates that the first node U01 resumes an RRC connection.

In one embodiment, the fourth node N04 is a base station.

In one embodiment, the fourth node N04 is a UE.

In one embodiment, the fourth node N04 is a relay.

Typically, the first node U01 is a UE, the second node N02 is a gNB, and the fourth node N04 is a gNB.

In one embodiment, the fourth node N04 is the second node N02.

In one embodiment, the fourth node N04 is not the second node N02.

In one embodiment, before determining that a data transmission in the RRC_INACTIVE state is not performed, the first message is received, the first message comprises at least a first information block, the first information block comprises at least a first identifier, the first identifier is associated with the first node U01, the first information block is indicated to perform a data transmission in the RRC_INACTIVE state; each condition in the first condition set is satisfied; the first condition set includes: the first message comprising a second information block, the second information block comprising at least a second identifier, the second identifier being associated with the first node U01, and the second information block not being indicated to perform a data transmission in the RRC_INACTIVE state.

In one embodiment, the first message triggers the fourth message.

In one embodiment, the fourth message is an RRC response for the first message.

In one embodiment, a determination that a data transmission in the RRC_INACTIVE state is not performed is used to determine transmitting the fourth message.

In one embodiment, before transmitting the fourth message, perform a unified access control procedure and consider the access attempt to be allowed.

In one embodiment, the fourth message comprises at least the RRC connection resume request message.

In one embodiment, the fourth message is the RRC connection resume request message.

In one embodiment, the fourth message is an RRC message.

In one embodiment, the fourth message comprises at least RRC message.

In one embodiment, the fourth message comprises at least one RRC IE.

In one embodiment, the fourth message comprises at least one RRC field.

In one embodiment, the fourth message is transmitted through a CCCH and is an RRCResumeRequest message.

In one embodiment, the fourth message is transmitted through a CCCH1 and is an RRCResumeRequest1 message.

In one embodiment, the fourth message is transmitted through SRB0.

In one embodiment, the fourth message is transmitted in a random access procedure.

In one embodiment, random access preamble resources in the random access procedure cannot be used to indicate an SDT.

In one embodiment, random access preamble resources in the random access procedure are not configured through FeatureCombinationPreambles.

In one embodiment, the fourth message comprises a resumeIdentity field, and the resumeIdentity field is set as a bit string.

In one embodiment, the above bit string is a shortI-RNTI of the first node U01.

In one embodiment, the above bit string is a fullI-RNTI of the first node U01.

In one embodiment, the above bit string comprises 24 bits.

In one embodiment, the above bit string comprises 40 bits.

In one embodiment, the fourth message comprises a resumeMAC-I field, and the resumeMAC-I field is set as a bit string.

In one embodiment, the fourth message comprises a resumeCause field.

In one embodiment, the resumeCause field in the fourth message is set as one of mps-Priority Access, mcs- Priority Access, highPriority Access, or mt-Access.

In one embodiment, the first node U01 receives the third message at the RRC layer.

In one embodiment, the third message is used to resume the suspended RRC connection.

In one embodiment, the third message is an RRC message.

In one embodiment, the third message is transmitted through a DCCH.

In one embodiment, the third message is transmitted through SRB1.

In one embodiment, a name of the third message comprises RRCResume.

In one embodiment, the third message is an RRCResume message.

In one embodiment, the third message is a downlink message.

In one embodiment, the third message comprises at least one RRC field.

In one embodiment, the third message comprises at least one RRC IE.

In one embodiment, the third message is an RRC response for the fourth message.

In one embodiment, the fourth message triggers the third message.

In one embodiment, during a running period of the timer T319, the third message is received.

In one embodiment, as a response to receiving the third message, stop the timer T319.

In one embodiment, the "as a response to the third message being received" includes: if the third message is received.

In one embodiment, the "as a response to the third message being received" includes: after the third message is received.

In one embodiment, the second radio bearer set comprises at least one of all DRBs of the first node U01, all multicast MRBs of the first node U01, SRB2 of the first node U01, or SRB3 of the first node U01.

In one embodiment, the second radio bearer set comprises all DRBs of the first node U01, all multicast MRBs of the first node U01, and SRB2 of the first node U01; herein, SRB3 of the first node U01 is not configured.

In one embodiment, the second radio bearer set comprises all DRBs of the first node U01, all multicast MRBs of the first node U01, SRB2 of the first node U01, and SRB3 of the first node U01; herein, SRB3 of the first node is configured.

In one embodiment, before initiating a transmission of the fourth message, start timer T319.

In one embodiment, before the fourth message is delivered by an RRC layer of the first node U01 to a lower layer of the RRC layer of the first node U01, start timer T319.

In one embodiment, before the fourth message is delivered by an RRC layer of the first node U01 to a lower layer of the RRC layer of the first node U01, resume SRB1.

In one embodiment, within a time interval from the first message being received to the third message being received, a PDCP entity for each radio bearer in the second radio bearer set is not re-established.

### Embodiment 9

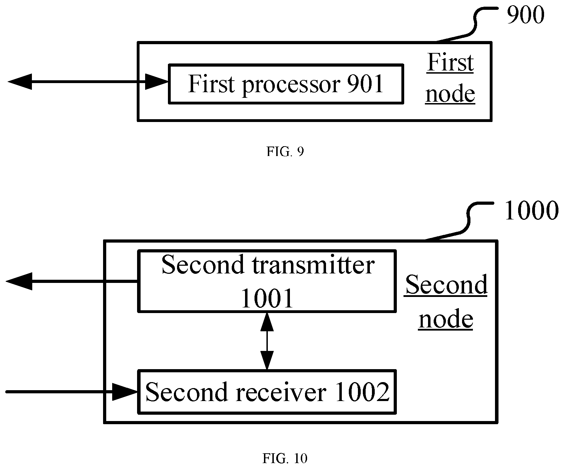

Embodiment 9 illustrates a structure block diagram of a processor in a first node according to one embodiment of the present application, as shown in FIG. 9. In FIG. 9, a processor 900 of a first node comprises a first processor 901.

The first processor 901 receives a first message, the first message comprises at least a first information block, the first information block comprises at least a first identifier, the first identifier is associated with the first node, the first information block is indicated to perform a data transmission in RRC_INACTIVE state; as a response to the first message being received, determines whether to perform a data transmission in the RRC_INACTIVE state according to whether a first condition set is satisfied.

In embodiment 9, the first condition set includes: the first message comprising a second information block, the second information block comprising at least a second identifier, the second identifier being associated with the first node, and the second information block not being indicated to perform a data transmission in the RRC_INACTIVE state; the behavior of determining whether to perform a data transmission in the RRC_INACTIVE state according to whether a first condition set is satisfied includes: if any condition in the first condition set is not satisfied, it is determined to perform a data transmission in the RRC_INACTIVE state; if each condition in the first condition set is satisfied, it is determined that a data transmission in the RRC_INACTIVE state is not performed.

In one embodiment, the first identifier is used to indicate the first node, and the second identifier indicates an MBS session in which the first node joins.

In one embodiment, the first identifier indicates an MBS session in which the first node joins, and the second identifier is used to indicate the first node.

In one embodiment, the first identifier indicates an MBS session in which the first node joins, and the second identifier indicates another MBS session in which the first node joins.

In one embodiment, the first information block being configured with a first indication is used to determine that the first information block is indicated to perform a data transmission in the RRC_INACTIVE state.

In one embodiment, the second information block not being configured with a second indication is used to determine that the second information block is not indicated to perform a data transmission in the RRC_INACTIVE state.

In one embodiment, the first indication and the second indication are different.

In one embodiment, the first indication and the second indication are the same.

In one embodiment, the first processor 901 determines to perform a data transmission in the RRC_INACTIVE state, transmits a second message; accompanying the second message, resumes each radio bearer in a first radio bearer set, or accompanying a first data block, resumes each radio bearer in a first radio bearer set; herein, the second message is used to request resuming an RRC connection; the first radio bearer set comprises at least one of at least one DRB of the first node, or an SRB2 of the first node, or at least one multicast MRB of the first node; within a time interval from the first message being received to each radio bearer in the first radio bearer set being resumed, the first node does not receive any RRC message indicating that the first node resumes an RRC connection.

In one embodiment, as a response to the second message being transmitted, the first data block is received; the first data block comprises at least user data.

In one embodiment, the first processor 901, if it is determined that a data transmission in the RRC_INACTIVE state is not performed, transmits a fourth message; as a response to the fourth message being transmitted, receives a third message; the first processor 901, as a response to the third message being received, resumes each radio bearer in a second radio bearer set; herein, the fourth message is used to request resuming an RRC connection; the second radio bearer set comprises at least one of all DRBs of the first node or all multicast MRBs of the first node; within a time interval from the first message being received to the third message being received, any radio bearer in the second radio bearer set is not resumed; the third message indicates that the first node resumes an RRC connection.

In one embodiment, the first processor 901 comprises a first receiver.

In one embodiment, the first processor 901 comprises a first transmitter.

In one embodiment, the first processor 901 comprises at least one of a first receiver or a first transmitter.

In one embodiment, the first receiver comprises the antenna 452, the receiver 454, the multi-antenna receiving processor 458, the receiving processor 456, the controller/ processor 459, the memory 460 and the data source 467 in FIG. 4 of the present application.

In one embodiment, the first receiver comprises the antenna 452, the receiver 454, the multi-antenna receiving processor 458 and the receiving processor 456 in FIG. 4 of the present application.

In one embodiment, the first receiver comprises the antenna 452, the receiver 454 and the receiving processor 456 in FIG. 4 of the present application.

In one embodiment, the first transmitter comprises the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter comprises the antenna 452, the transmitter 454, the multi-antenna transmitting processor 457 and the transmitting processor 468 in FIG. 4 of the present application.

In one embodiment, the first transmitter comprises the antenna 452, the transmitter 454 and the transmitting processor 468 in FIG. 4 of the present application.

### Embodiment 10

Embodiment 10 illustrates a structure block diagram of a processor in a second node according to one embodiment of the present application, as shown in FIG. 10. In FIG. 10, a processor 1000 in a second node comprises a second transmitter 1001 and a second receiver 1002.

The second transmitter 1001 transmits a first message, the first message comprises at least a first information block, the first information block comprises at least a first identifier, the first identifier is associated with a first node, and the first information block is indicated to perform a data transmission in RRC_INACTIVE state.

In embodiment 10, the first node is a receiver of the first message; whether a first condition set is satisfied is used to determine whether a data transmission in the RRC_INACTIVE state is performed; the first condition set includes: the first message comprising a second information block, the second information block comprising at least a second identifier, the second identifier being associated with the first node, and the second information block not being indicated to perform a data transmission in the RRC_INACTIVE state; the phrase that whether a first condition set is satisfied is used to determine whether a data transmission in the RRC_INACTIVE state is performed includes: the first condition set being satisfied is used to determine that a data transmission in the RRC_INACTIVE state is performed; the first condition set not being satisfied is used to determine that a data transmission in the RRC_INACTIVE state is not performed.

In one embodiment, the first identifier is used to indicate a receiver of the first message, and the second identifier indicates an MBS session in which a receiver of the first message joins.

In one embodiment, the first identifier indicates an MBS session in which the first node joins, and the second identifier is used to indicate the first node.

In one embodiment, the first identifier indicates an MBS session in which the first node joins, and the second identifier indicates another MBS session in which the first node joins.

In one embodiment, the first information block being configured with a first indication is used to determine that the first information block is indicated to perform a data transmission in the RRC_INACTIVE state.

In one embodiment, the second information block not being configured with a second indication is used to determine that the second information block is not indicated to perform a data transmission in the RRC_INACTIVE state.

In one embodiment, the first indication and the second indication are different.

In one embodiment, the first indication and the second indication are the same.

In one embodiment, the second receiver 1002 receives a second message; herein, the first node determines that a data transmission in the RRC_INACTIVE state is used to determine transmitting the second message; accompanying the second message, each radio bearer in a first radio bearer set is resumed, or accompanying a first data block, each radio bearer in a first radio bearer set is resumed; the first radio bearer set comprises at least one of at least one DRB of the first node, or an SRB2 of the first node, or at least one multicast MRB of the first node; the second message is used to request resuming an RRC connection; within a time interval from the first message being received to each radio bearer in the first radio bearer set being resumed, the first node does not receive any RRC message indicating that the first node resumes an RRC connection.

In one embodiment, the second transmitter 1001, as a response to the second message being received, transmits a first data block; the first data block comprises at least user data.

In one embodiment, the second receiver 1002 receives a fourth message; the second transmitter 1001, as a response to the fourth message being received, transmits a third message; herein, the first node determines that a data transmission in the RRC_INACTIVE state not being executed is used to determine transmitting the fourth message; as a response to the third message being received, each radio bearer in a second radio bearer set is resumed by the first node; the fourth message is used to request resuming an RRC connection; the second radio bearer set comprises at least one of all DRBs of the first node or all multicast MRBs of the first node; within a time interval from the first message being received to the third message being received, any radio bearer in the second radio bearer set is not resumed; the third message indicates that the first node resumes an RRC connection.

In one embodiment, the second transmitter 1001 comprises the antenna 420, the transmitter 418, the multi-antenna transmitting processor 471, the transmitting processor 416, the controller/ processor 475 and the memory 476 in FIG. 4 of the present application.

In one embodiment, the second transmitter 1001 comprises the antenna 420, the transmitter 418, the multi-antenna transmitting processor 471 and the transmitting processor 416 in FIG. 4 of the present application.

In one embodiment, the second transmitter 1001 comprises the antenna 420, the transmitter 418 and the transmitting processor 416 in FIG. 4 of the present application.

In one embodiment, the second receiver 1002 comprises the antenna 420, the receiver 418, the multi-antenna receiving processor 472, the receiving processor 470, the controller/ processor 475 and the memory 476 in FIG. 4 of the present application.

In one embodiment, the second receiver 1002 comprises the antenna 420, the receiver 418, the multi-antenna receiving processor 472 and the receiving processor 470 in FIG. 4 of the present application.

In one embodiment, the second receiver 1002 comprises the antenna 420, the receiver 418 and the receiving processor 470 in FIG. 4 of the present application.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The user equipment, terminal and UE include but are not limited to Unmanned Aerial Vehicles (UAVs), communication modules on UAVs, tele-controlled aircrafts, aircrafts, diminutive airplanes, mobile phones, tablet computers, notebooks, vehicle-mounted communication equipment, wireless sensors, network cards, Internet of Things (IoT) terminals, RFID terminals, NB-IOT terminals, Machine Type Communication (MTC) terminals, enhanced MTC (eMTC) terminals, data card, network cards, vehicle-mounted communication equipment, low-cost mobile phones, low-cost tablets and other wireless communication devices. The UE and terminal in the present application include but not limited to unmanned aerial vehicles, communication modules on unmanned aerial vehicles, tele-controlled aircrafts, aircrafts, diminutive airplanes, mobile phones, tablet computers, notebooks, vehicle-mounted communication equipment, wireless sensor, network cards, terminals for Internet of Things, RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

The above are merely the preferred embodiments of the present application and are not intended to limit the scope of protection of the present application. Any modification, equivalent substitute and improvement made within the spirit and principle of the present application are intended to be included within the scope of protection of the present application.

## Claims

1. A first node for wireless communications, comprising:
a first processor, receiving a first message, the first message comprising at least a first information block, the first information block comprising at least a first identifier, the first identifier being associated with the first node, the first information block being indicated to perform a data transmission in RRC_INACTIVE state; as a response to the first message being received, determining whether to perform a data transmission in the RRC_INACTIVE state according to whether a first condition set is satisfied;
wherein the first condition set includes: the first message comprising a second information block, the second information block comprising at least a second identifier, the second identifier being associated with the first node, and the second information block not being indicated to perform a data transmission in the RRC_INACTIVE state; the behavior of determining whether to perform a data transmission in the RRC_INACTIVE state according to whether a first condition set is satisfied includes: if any condition in the first condition set is not satisfied, it is determined to perform a data transmission in the RRC_INACTIVE state; if each condition in the first condition set is satisfied, it is determined that a data transmission in the RRC_INACTIVE state is not performed.

2. The first node according to claim 1, wherein the first identifier is used to indicate the first node, and the second identifier indicates an MBS session in which the first node joins.

3. The first node according to claim 1, wherein the first identifier indicates an MBS session in which the first node joins, and the second identifier is used to indicate the first node.

4. The first node according to claim 1, wherein the first identifier indicates an MBS session in which the first node joins, and the second identifier indicates another MBS session in which the first node joins.

5. The first node according to any of claims 1-4, wherein the first information block being configured with a first indication is used to determine that the first information block is indicated to perform a data transmission in the RRC_INACTIVE state; the second information block not being configured a second indication is used to determine that the second information block is not indicated to perform a data transmission in the RRC_INACTIVE state.

6. The first node according to any of claims 1-5, comprising:
the first processor, if it is determined to perform a data transmission in the RRC_INACTIVE state, transmitting a second message; accompanying the second message, resuming each radio bearer in a first radio bearer set;
wherein the second message is used to request resuming an RRC connection; the first radio bearer set comprises at least one of at least one DRB of the first node, or an SRB2 of the first node, or at least one multicast MRB of the first node; within a time interval from the first message being received to each radio bearer in the first radio bearer set being resumed, the first node does not receive any RRC message indicating that the first node resumes an RRC connection.

7. The first node according to any of claims 1-5, comprising:
the first processor, if it is determined that a data transmission in the RRC_INACTIVE state is not performed, transmitting a fourth message; as a response to the fourth message being transmitted, receiving a third message; as a response to the third message being received, resuming each radio bearer in a second radio bearer set;
wherein the fourth message is used to request resuming an RRC connection; the second radio bearer set comprises at least one of all DRBs of the first node or all multicast MRBs of the first node; within a time interval from the first message being received to the third message being received, any radio bearer in the second radio bearer set is not resumed; the third message indicates that the first node resumes an RRC connection.

8. A second node for wireless communications, comprising:
a second transmitter, transmitting a first message, the first message comprising at least a first information block, the first information block comprising at least a first identifier, the first identifier being associated with a first node, the first information block being indicated to perform a data transmission in RRC_INACTIVE state;
wherein the first node is a receiver of the first message; whether a first condition set is satisfied is used to determine whether a data transmission in the RRC_INACTIVE state is performed; the first condition set includes: the first message comprising a second information block, the second information block comprising at least a second identifier, the second identifier being associated with the first node, and the second information block not being indicated to perform a data transmission in the RRC_INACTIVE state; the phrase that whether a first condition set is satisfied is used to determine whether a data transmission in the RRC_INACTIVE state is performed includes: the first condition set being satisfied is used to determine that a data transmission in the RRC_INACTIVE state is performed; the first condition set not being satisfied is used to determine that a data transmission in the RRC_INACTIVE state is not performed.

9. A method in a first node for wireless communications, comprising:
receiving a first message, the first message comprising at least a first information block, the first information block comprising at least a first identifier, the first identifier being associated with the first node, the first information block being indicated to perform a data transmission in RRC_INACTIVE state; as a response to the first message being received, determining whether to perform a data transmission in the RRC_INACTIVE state according to whether a first condition set is satisfied;
wherein the first condition set includes: the first message comprising a second information block, the second information block comprising at least a second identifier, the second identifier being associated with the first node, and the second information block not being indicated to perform a data transmission in the RRC_INACTIVE state; the behavior of determining whether to perform a data transmission in the RRC_INACTIVE state according to whether a first condition set is satisfied includes: if any condition in the first condition set is not satisfied, it is determined to perform a data transmission in the RRC_INACTIVE state; if each condition in the first condition set is satisfied, it is determined that a data transmission in the RRC_INACTIVE state is not performed.

10. A method in a second node for wireless communications, comprising:
transmitting a first message, the first message comprising at least a first information block, the first information block comprising at least a first identifier, the first identifier being associated with a first node, the first information block being indicated to perform a data transmission in RRC_INACTIVE state;
wherein the first node is a receiver of the first message; whether a first condition set is satisfied is used to determine whether a data transmission in the RRC_INACTIVE state is performed; the first condition set includes: the first message comprising a second information block, the second information block comprising at least a second identifier, the second identifier being associated with the first node, and the second information block not being indicated to perform a data transmission in the RRC_INACTIVE state; the phrase that whether a first condition set is satisfied is used to determine whether a data transmission in the RRC_INACTIVE state is performed includes: the first condition set being satisfied is used to determine that a data transmission in the RRC_INACTIVE state is performed; the first condition set not being satisfied is used to determine that a data transmission in the RRC_INACTIVE state is not performed.
